# EUROPEAN PATENT SPECIFICATION

(11) **EP 4 458 558 B1**
(45) Date of publication and mention of the grant of the patent: **22.07.2026**
(21) Application number: 24166510.8
(22) Date of filing: 26.03.2024
(51) Int. Cl.: B29C 65/04, B29C 65/82, B29L 31/00

(54) **CONVEYANCE BELT WELDING APPARATUS AND CONVEYANCE BELT WELDING METHOD**
FÖRDERBANDSCHWEISSVORRICHTUNG UND FÖRDERBANDSCHWEISSVERFAHREN
APPAREIL DE SOUDAGE DE COURROIE DE TRANSPORT ET PROCÉDÉ DE SOUDAGE DE COURROIE DE TRANSPORT

(30) Priority: 28.03.2023 JP 2023052014
(43) Date of publication of application: 06.11.2024
(73) Proprietor: Seiko Epson Corporation, Tokyo 160-8801 (JP)
(72) Inventor: YASHIRO, Hirotaka, 392-8502 Suwa-shi (JP); AIZAWA, Tadashi, 392-8502 Suwa-shi (JP); AOKI, Hiroki, 392-8502 Suwa-shi (JP); SASAKI, Tsuneyuki, 392-8502 Suwa-shi (JP); TANIGUCHI, Shinya, 392-8502 Suwa-shi (JP); YAMADA, Kohei, 392-8502 Suwa-shi (JP)
(74) Representative: Lewis Silkin LLP

(56) References cited:
- JP-A- 2017 185 766
- JP-A- S6 072 717
- US-A- 3 423 271

## Description

### BACKGROUND

### 1. Technical Field

The present disclosure relates to a conveyance belt welding apparatus and a conveyance belt welding method.

### 2. Related Art

For example, JP-A-2004-299826 discloses a conveyance mechanism in which a fastener is provided in a conveyance belt itself used for a recording apparatus and the like. In such a conveyance mechanism, the conveyance belt can be attached by opening and closing the fastener without disassembling the recording apparatus. It is desired that this improves the efficiency of the operation of attaching the conveyance belt.

With such a conveyance belt attaching method, however, the conveyance belt has irregularity due to the fastener. This may result in a risk of reduction in conveyance accuracy of conveying the medium. In view of this, it is desired to improve the efficiency of the operation of attaching the conveyance belt while ensuring the quality of attaching the conveyance belt. JP S60 72717 discloses the preparation of an endless conveyor belt in which the end surfaces of a body are joined together by providing a high frequency oscillating current by a high frequency oscillating die at the joining position. The ends are welded by heating generated by dielectric loss.

US 3423271 discloses cutting of thermoplastic fabrics.

JP 2017-185766 discloses a high frequency sewing machine, in which a machining object is continuously transported in a vertically sandwiched manner by endless belts, high frequency electric power is supplied between a gap between minus and plus electrodes arranged at upper and lower positions on a machining object transportation path in a facing manner each other so that thermoplastic resin tape is melted by dielectric heating, and overlapping parts of fiber material are successively adhered with molten tape adhesive agent.

### SUMMARY

A conveyance belt welding apparatus for solving the above-described problems is a conveyance belt welding apparatus configured to weld a conveyance belt configured to convey a medium, the conveyance belt welding apparatus including a contact part including a contact surface configured to come into contact with the conveyance belt, a first electrode, a second electrode disposed surrounding the first electrode in plan view from a first direction toward the conveyance belt, a first conductor including a coil and configured to electrically couple a transmission line configured to transmit a high-frequency voltage and the first electrode, and a second conductor configured to electrically couple the transmission line and the second electrode, in which the first electrode and the second electrode weld the conveyance belt by generating electromagnetic waves in response to application of a high-frequency voltage.

A conveyance belt welding method for solving the above-described problems is a conveyance belt welding method using a conveyance belt welding apparatus configured to weld a conveyance belt configured to convey a medium, the conveyance belt welding apparatus including a contact part including a contact surface configured to come into contact with the conveyance belt, a first electrode, a second electrode disposed surrounding the first electrode in plan view from a first direction toward the conveyance belt, a first conductor including a coil and configured to electrically couple a transmission line configured to transmit a high-frequency voltage and the first electrode, and a second conductor configured to electrically couple the transmission line and the second electrode, the conveyance belt welding method including welding the conveyance belt by the first electrode and the second electrode by generating electromagnetic waves in response to application of a high-frequency voltage.

### BRIEF DESCRIPTION OF THE DRAWINGS

FIG. 1 is a schematic view illustrating a conveyance belt welding apparatus, a recording apparatus and a conveyance apparatus.
FIG. 2 is a block diagram illustrating the conveyance belt welding apparatus.
FIG. 3 is a perspective view illustrating an electromagnetic wave generation unit.
FIG. 4 is a perspective view illustrating the electromagnetic wave generation unit.
FIG. 5 is a perspective view illustrating the electromagnetic wave generation unit.
FIG. 6 is a perspective view illustrating the electromagnetic wave generation unit.
FIG. 7 is a schematic view illustrating a coil and a coupling position switching unit.
FIG. 8 is a perspective view illustrating the electromagnetic wave generation unit.
FIG. 9 is a schematic view illustrating the electromagnetic wave generation unit.
FIG. 10 is a block diagram illustrating the electromagnetic wave generation unit.
FIG. 11 is a perspective view illustrating the electromagnetic wave generation unit.
FIG. 12 is a schematic view illustrating the electromagnetic wave generation unit.
FIG. 13 is a bottom view illustrating the electromagnetic wave generation unit.
FIG. 14 is a block diagram illustrating the electromagnetic wave generation unit.
FIG. 15 is a flowchart illustrating a movement controlling processing.
FIG. 16 is a perspective view illustrating the electromagnetic wave generation unit.
FIG. 17 is a perspective view illustrating the electromagnetic wave generation unit.
FIG. 18 is a schematic view illustrating the electromagnetic wave generation unit.
FIG. 19 is a schematic view illustrating the electromagnetic wave generation unit.
FIG. 20 is a schematic view illustrating the electromagnetic wave generation unit.

### DESCRIPTION OF EMBODIMENTS

### First Embodiment

An embodiment of a conveyance belt welding apparatus as an example of a heating apparatus and a conveyance belt welding method is described below. In the following description, the direction that intersects the vertical direction Z is the first horizontal direction X, and the direction that intersects the vertical direction Z and the first horizontal direction X is the second horizontal direction Y. One direction along the first horizontal direction X is the direction X1, and the other direction along the first horizontal direction X is the direction X2. One direction along the second horizontal direction Y is the direction Y1, and the other direction along the second horizontal direction Y is the direction Y2. The upward direction in the vertical direction Z is the upward direction Z1, and the downward direction in the vertical direction Z is the downward direction Z2. The downward direction Z2 is an example of the first direction. A plan view in the vertical direction Z may be a plan view in the upward direction Z1 or a plan view in the downward direction Z2. A plan view in the vertical direction Z is simply described as plan view.

### Configurations of Recording Apparatus 90 and Conveyance Apparatus 91

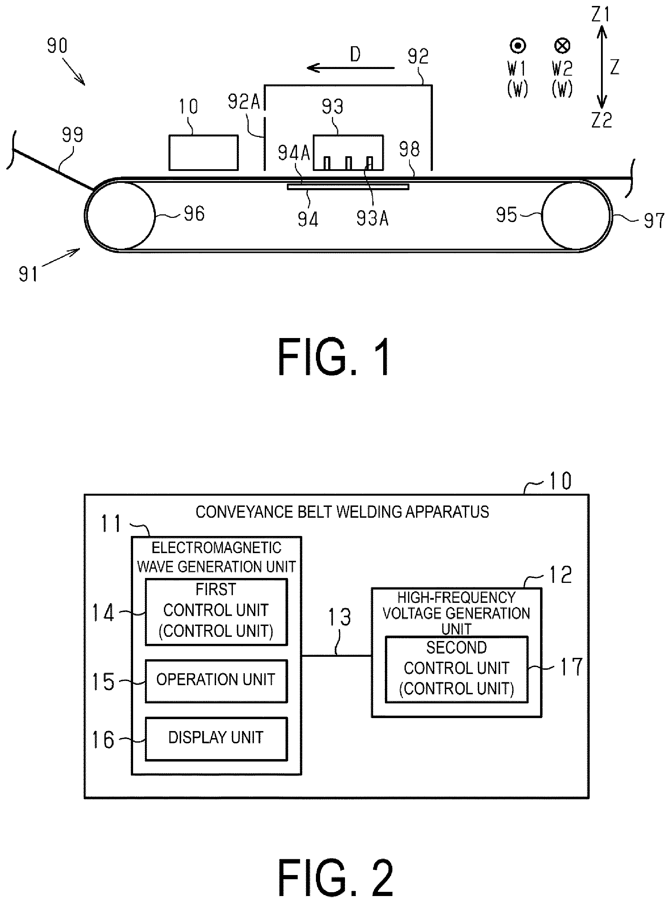

As illustrated in FIG. 1, a conveyance belt welding apparatus 10 can perform welding of conveyance belt 97. A conveyance belt 97 is an example of the heating object. The conveyance belt 97 may be used for the recording apparatus 90 and the conveyance apparatus 91.

The recording apparatus 90 is configured to perform recording on medium 99. The recording apparatus 90 may be an ink-jet printer that performs recording by ejecting ink as an example of liquid to the medium 99. The medium 99 is fabric, but may also be paper, for example.

The recording apparatus 90 includes an apparatus housing 92 and a recording unit 93. The apparatus housing 92 is configured to house at least the recording unit 93. The apparatus housing 92 may be configured to not house a first roller 95. Specifically, the first roller 95 may be exposed from the apparatus housing 92. The apparatus housing 92 may be configured to not house a second roller 96. Specifically, the second roller 96 may be exposed from the apparatus housing 92.

The apparatus housing 92 may include an opening/closing door 92A. The opening/closing door 92A may be provided on the side of a conveyance direction D of the medium 99 in the apparatus housing 92. The conveyance direction D is a direction along the longitudinal direction of the medium 99. The opening/closing door 92A is a door that can open and close the inside of the apparatus housing 92. Thus, the inside of the apparatus housing 92 can be accessed by opening the opening/closing door 92A. Specifically, by opening the opening/closing door 92A, a support surface 94A can be accessed. By opening the opening/closing door 92A, the conveyance belt welding apparatus 10 can be operated inside the apparatus housing 92.

The recording unit 93 is configured to perform recording on the medium 99 by ejecting liquid to the medium 99. The recording unit 93 performs recording on the medium 99 conveyed by the conveyance belt 97. The recording unit 93 performs recording on the medium 99 supported by the conveyance belt 97 and a support stand 94.

The recording unit 93 may be a head. The recording unit 93 may be a serial head or a line head. The serial head is a head that performs scanning in a width direction W of the medium 99. The line head is a head that simultaneously performs recording over the width direction W of the medium 99. One direction along the width direction W is a first width direction W1, and the other direction along the width direction W is a second width direction W2.

When the recording unit 93 is a serial head, it is disposed at an initial position when it does not perform the recording. The initial position may be located on the first width direction W1 side than the recording region. The initial position may be located on the first width direction W1 side than the conveyance belt 97. Specifically, when the recording unit 93 is a serial head, it is disposed at a position where it is does not interfere with the welding of the conveyance belt 97.

The recording unit 93 includes a plurality of nozzles 93A. Each of the plurality of nozzles 93A is configured to open in the downward direction Z2. Each of the plurality of nozzles 93A is configured to eject liquid.

The recording apparatus 90 includes the support stand 94. The support stand 94 is configured to support the medium 99 conveyed by the conveyance belt 97 together with the conveyance belt 97. The support stand 94 is located on the downward direction Z2 side of the recording unit 93. The support stand 94 may have a flat plate shape. The support stand 94 may be made of metal.

The support stand 94 includes the support surface 94A. The support surface 94A is a surface facing the upward direction Z1. The support surface 94A is located on the downward direction Z2 side of the recording unit 93. The support surface 94A is provided to face the plurality of nozzles 93A.

In this manner, the support stand 94 is configured to support the medium 99 conveyed by the conveyance belt 97 together with the conveyance belt 97. In addition, the support stand 94 may be configured to support the conveyance belt 97 when welding the conveyance belt 97. The member that supports the conveyance belt 97 when welding the conveyance belt 97 is not limited to the support stand 94.

The recording apparatus 90 includes the conveyance apparatus 91. The conveyance apparatus 91 is configured to convey the medium 99 in the conveyance direction D. The conveyance apparatus 91 may include a plurality of rollers. The conveyance apparatus 91 may include the first roller 95 and the second roller 96. The first roller 95 is located upstream of the second roller 96 in the conveyance direction D. The first roller 95 is located upstream of the recording unit 93 in the conveyance direction D. The second roller 96 is located downstream of the recording unit 93 in the conveyance direction D.

The conveyance apparatus 91 includes the conveyance belt 97. That is, the recording apparatus 90 includes the conveyance belt 97. The conveyance belt 97 can convey the medium 99. The conveyance belt 97 is configured to convey the medium 99 in the state of supporting the medium 99. The conveyance belt 97 is wound around a plurality of rollers. The conveyance belt 97 is wound around the first roller 95 and the second roller 96. When the first roller 95 rotates, the conveyance belt 97 moves along the first roller 95 and the second roller 96.

The conveyance belt 97 includes an outer peripheral surface 98. The conveyance belt 97 that supports the medium 99 is a belt with the outer peripheral surface 98 on which an adhesive is applied, for example. The medium 99 is bonded to the outer peripheral surface 98 with an adhesive. In this manner, the posture of the medium 99 is stabilized. The adhesive is not limitative, and the medium 99 may be bonded to the outer peripheral surface 98 with a suction force, an electrostatic force, an intermolecular force, and the like, for example.

In this manner, the conveyance belt 97 conveys the medium 99 supported by the outer peripheral surface 98 by moving along the first roller 95 and the second roller 96. The conveyance apparatus 91 conveys the medium 99 supported by the conveyance belt 97 by rotating at least one of the first roller 95 and the second roller 96.

The conveyance belt 97 may have a layered structure of a polyurethane material and an aramid material. The conveyance belt 97 can be welded by being heated at a predetermined temperature for a predetermined time in a state of being pressed with a predetermined pressure. Specifically, the conveyance belt 97 can be welded through heating of the polyurethane material. Deformation due to the welding of the conveyance belt 97 is suppressed by the pressing with a predetermined pressure.

The welding of the conveyance belt 97 includes coupling welding. The coupling welding is performed when replacing the conveyance belt 97 with an endless shape. The coupling welding is welding for forming the conveyance belt 97 with an endless shape by coupling the longitudinal both end portions of the conveyance belt 97. The coupling welding welds the longitudinal both end portions of the conveyance belt 97.

The longitudinal both end portions of the conveyance belt 97 may be obliquely cut along the width direction W in plan view. Specifically, the longitudinal both end portions of the conveyance belt 97 may be processed into a continuous V-shape along the width direction W in plan view. In this case, the coupling welding welds the longitudinal both end portions of the conveyance belt 97 with the longitudinal both end portions of the conveyance belt 97 stacked on each other in the direction along the conveyance direction D. In this manner, the welding area can be increased, and thus the welding quality of the conveyance belt 97 can be improved. In this manner, the conveyance accuracy of the conveyance belt 97 can be improved.

The welding of the conveyance belt 97 includes repair welding. The repair welding is performed when repairing the repair region of the conveyance belt 97. The repair region of the conveyance belt 97 is a part of the region of the conveyance belt 97 that needs to be repaired as it deteriorates over time.

### Configuration of Conveyance Belt Welding Apparatus 10

As illustrated in FIG. 2, the conveyance belt welding apparatus 10 includes an electromagnetic wave generation unit 11. The conveyance belt welding apparatus 10 may include a high-frequency voltage generation unit 12. The conveyance belt welding apparatus 10 may include a transmission line 13.

The electromagnetic wave generation unit 11 is configured to generate electromagnetic waves. The electromagnetic wave generation unit 11 generates an alternating current electric field through generation of electromagnetic waves. The electromagnetic wave generation unit 11 heats the conveyance belt 97 through generation of electromagnetic waves. The electromagnetic wave generation unit 11 can weld the conveyance belt 97 through heating. The main component of the electromagnetic waves generated by the electromagnetic wave generation unit 11 is an electric field. The electromagnetic wave generation unit 11 can significantly reduce the induction of the magnetic field due to the generated electric field in comparison with electromagnetic wave generation units that generate typical electromagnetic waves.

As a specific example, the electromagnetic wave generation unit 11 generates electromagnetic waves of 2.4 GHz, but this is not limitative. The electromagnetic wave generation unit 11 may generate electromagnetic waves of 3 MHz to 300 MHz, for example. The electromagnetic wave generation unit 11 may generate electromagnetic waves of 300 M to 30 GHz, or more specifically electromagnetic waves of 10 MHz to 20 GHz, for example.

The conveyance belt welding apparatus 10 includes a control unit. The control unit controls the conveyance belt welding apparatus 10. Specifically, the electromagnetic wave generation unit 11 may include a first control unit 14 as the control unit. The first control unit 14 controls the electromagnetic wave generation unit 11. The first control unit 14 controls various operations executed at the electromagnetic wave generation unit 11.

The control unit may be configured as a circuit including α: one or more processors that execute various processing in accordance with a computer program, β: one or more dedicated hardware circuits that execute at least part of the various processing, or γ: their combinations. The hardware circuit is an application-specific integrated circuit, for example. The processor includes a CPU and a memory such as a RAM and a ROM, and the memory stores program codes or commands configured to cause the CPU to execute processing. The memory, i.e., a computer readable medium includes any readable mediums that can be accessed by general-purpose or dedicated computers.

The electromagnetic wave generation unit 11 may include an operation unit 15. The operation unit 15 is operable by the operator. The operation unit 15 may allow for an operation related to the conveyance belt welding apparatus 10. The operation unit 15 may allow for an operation related to the electromagnetic wave generation unit 11. The operation unit 15 may allow for an operation related to the high-frequency voltage generation unit 12. The operation unit 15 may allow for an operation of switching whether to generate electromagnetic waves from the electromagnetic wave generation unit 11.

The electromagnetic wave generation unit 11 may include a display unit 16. The display unit 16 may display information related to the conveyance belt welding apparatus 10. The operation unit 15 may display information related to the electromagnetic wave generation unit 11. The operation unit 15 may display information related to the high-frequency voltage generation unit 12. The display unit 16 may display information representing whether electromagnetic waves are being generated from the electromagnetic wave generation unit 11. The display unit 16 may be a liquid crystal display unit, or an LED lamp.

The high-frequency voltage generation unit 12 is configured to generate a high-frequency voltage. The high-frequency voltage generation unit 12 can supply a high-frequency voltage to the electromagnetic wave generation unit 11 through the transmission line 13. Specifically, the high-frequency voltage generation unit 12 generates the voltage to be applied to the electromagnetic wave generation unit 11.

The high-frequency voltage generation unit 12 may include a second control unit 17 as the control unit. The second control unit 17 controls the high-frequency voltage generation unit 12. The second control unit 17 controls various operations executed at the high-frequency voltage generation unit 12. The first control unit 14 and the second control unit 17 may exchange information. The conveyance belt welding apparatus 10 includes both the first control unit 14 and the second control unit 17 as the control unit, but the conveyance belt welding apparatus 10 may include one of them.

Note that the conveyance belt welding apparatus 10 may include an operation unit that can be operated at the high-frequency voltage generation unit 12 separately from the operation unit 15 of the electromagnetic wave generation unit 11. The conveyance belt welding apparatus 10 may include a display unit that displays information at the high-frequency voltage generation unit 12 separately from the display unit 16 of the electromagnetic wave generation unit 11.

The transmission line 13 is a line that couples the electromagnetic wave generation unit 11 and the high-frequency voltage generation unit 12. The transmission line 13 is a line for transmitting the high-frequency voltage generated by the high-frequency voltage generation unit 12 to the electromagnetic wave generation unit 11. That is, the transmission line 13 can transmit a high-frequency voltage.

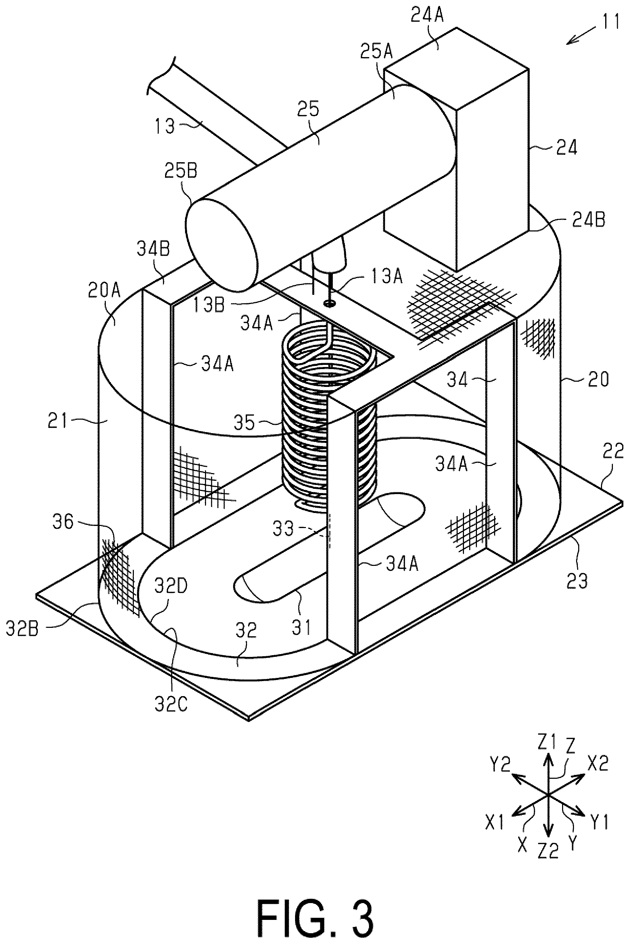

The transmission line 13 may be, but not limited to, a coaxial cable. As illustrated in FIG. 3, the transmission line 13 may include an inner conductor 13A and an outer conductor 13B. The inner conductor 13A may include a core wire of the transmission line 13. The outer conductor 13B may be an electromagnetic shield that covers the inner conductor 13A. The inner conductor 13A corresponds to an example of the first transmission line, and the outer conductor 13B corresponds to an example of the second transmission line.

### Configuration of Electromagnetic Wave Generation Unit 11

As illustrated in FIG. 3, the electromagnetic wave generation unit 11 includes a housing 20. The housing 20 constitutes the inner space of the electromagnetic wave generation unit 11. The housing 20 can house various members constituting the electromagnetic wave generation unit 11. That is, the housing 20 is configured to cover at least some of various members constituting the electromagnetic wave generation unit 11. Specifically, the housing 20 may be configured to cover a first electrode 31, a second electrode 32, a first conductor 33 and a second conductor 34. In this manner, no direct contact with the first electrode 31, the second electrode 32, the first conductor 33 and the second conductor 34 is made from the outside of the housing 20. The inner space is a space that can house at least the first electrode 31 and the second electrode 32.

The housing 20 may include a housing case 21. That is, the conveyance belt welding apparatus 10 may include the housing case 21. The housing 20 includes a contact part 22. That is, the conveyance belt welding apparatus 10 includes the contact part 22. The housing case 21 is composed of a material with transmissivity, and therefore only an end portion is illustrated in FIG. 3.

The housing case 21 constitutes the inner space of the electromagnetic wave generation unit 11 together with the contact part 22. The housing case 21 can house various members constituting the electromagnetic wave generation unit 11. The housing case 21 has a rounded rectangular shape in plan view, but the shape is not limited and may be a rectangular shape, for example. The rounded rectangular shape is composed of two straight lines and two curved lines. The two straight lines are extended in the first horizontal direction X and disposed side by side in the second horizontal direction Y. The two curved lines are located on both sides in the first horizontal direction X. The rounded rectangular shape may be a shape like an athletic track.

The housing case 21 is composed of an insulating member. The housing case 21 may be made of resin. The housing case 21 is coupled with the contact part 22. The housing case 21 extends from the contact part 22 in the upward direction Z1. In this manner, the housing case 21 is provided to cover the first electrode 31, the second electrode 32, the first conductor 33 and the second conductor 34 from the upward direction Z1 side. That is, the housing case 21 can house the first electrode 31, the second electrode 32, the first conductor 33 and the second conductor 34.

At least a part of the housing case 21 may have transmissivity. The housing case 21 may be a transparent plastic case. In this manner, the inside of the conveyance belt welding apparatus 10 can be visually recognized from the outside.

The contact part 22 is located on the downward direction Z2 side of the housing case 21. The contact part 22 may have a flat plate shape. The contact part 22 has a rectangular shape in plan view, but the shape is not limited, and may have a rounded rectangular shape, for example. The contact part 22 may have a rectangular shape with the sides along the first horizontal direction X longer than the sides along the second horizontal direction Y in plan view. The contact part 22 is provided to cover the first electrode 31, the second electrode 32, the first conductor 33 and the second conductor 34 from the downward direction Z2 side.

The contact part 22 is composed of a material that transmits electromagnetic waves generated by the first electrode 31 and the second electrode 32. The contact part 22 is pressed with the conveyance belt 97 in contact with a contact surface 23 when welding the conveyance belt 97. As such, the contact part 22 may be a material with a certain degree of hardness. In addition, the contact part 22 protects the first electrode 31, the second electrode 32, the first conductor 33 and the second conductor 34. Specifically, the contact part 22 protects the first electrode 31, the second electrode 32, the first conductor 33 and the second conductor 34 also from the stress caused by the pressing of the conveyance belt 97.

The contact part 22 is composed of an insulating member. The contact part 22 may be a glass plate. Specifically, at least a part of the contact part 22 may have transmissivity. In this manner, the region of the conveyance belt 97 in contact with the contact part 22 can be visually recognized, in whole or in part, from the outside of the conveyance belt welding apparatus 10. The contact part 22 may be a ceramic with high transparency. The contact part 22 may be a resin with low dielectric loss tangent.

The contact part 22 includes the contact surface 23. The contact surface 23 is a surface facing the downward direction Z2 side. The contact surface 23 can come into contact with the conveyance belt 97 when welding the conveyance belt 97. When the conveyance belt welding apparatus 10 is used with the conveyance belt 97 supported at the support stand 94, the contact surface 23 can come into contact with the conveyance belt 97 with the conveyance belt 97 sandwiched between it and the support stand 94.

The electromagnetic wave generation unit 11 may include a coupling part 24 and a holding part 25. The coupling part 24 may be composed of an insulating member. The coupling part 24 may be made of resin. The coupling part 24 extends along the vertical direction Z. The coupling part 24 includes an upper end portion 24A and a lower end portion 24B. The upper end portion 24A is coupled with the holding part 25. The lower end portion 24B is coupled with a top surface 20A of the housing 20. The lower end portion 24B may be located at the other direction X2 side in the first horizontal direction X in the top surface 20A of the housing 20.

The holding part 25 is a portion that can be grabbed by the operator. The holding part 25 is composed of an insulating member such as resin, but may be made of metal, for example. The holding part 25 may extend along the first horizontal direction X. The holding part 25 may extend in one direction X1 in the first horizontal direction X. The holding part 25 includes a base end portion 25A and a tip end portion 25B. The base end portion 25A is coupled with the upper end portion 24A of the coupling part 24. That is, the holding part 25 is coupled with the housing case 21 and insulated from the housing case 21.

The holding part 25 is provided at a position separated from the top surface 20A of the housing 20 in the upward direction Z1. The holding part 25 is provided at a position separated from the contact part 22 in the upward direction Z1. In addition, the holding part 25 is provided at a position separated from the first electrode 31 and the second electrode 32 in the upward direction Z1. The holding part 25 may be provided with the operation unit 15. The holding part 25 may be provided with the display unit 16.

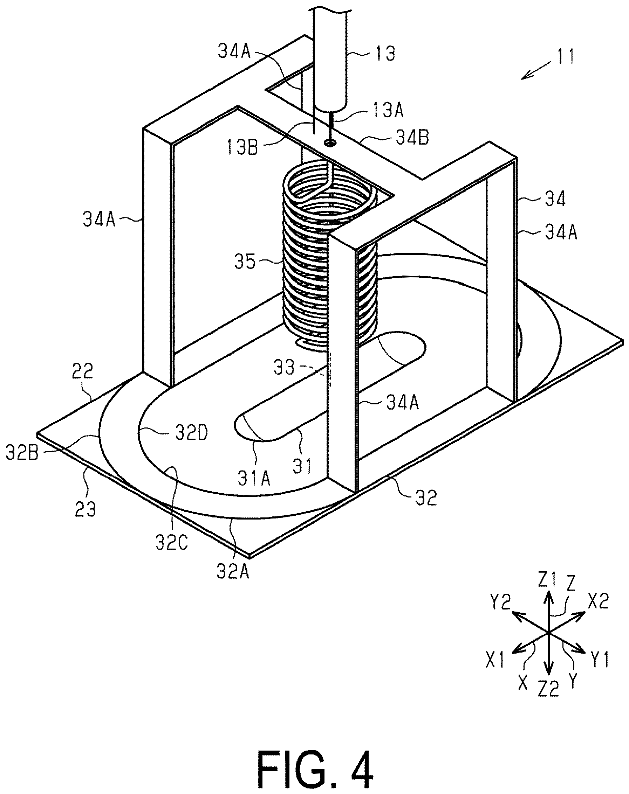

As illustrated in FIGS. 3 and 4, the electromagnetic wave generation unit 11 includes the first electrode 31, the second electrode 32, the first conductor 33, and the second conductor 34. The first electrode 31 has a flat plate shape. The first electrode 31 may have a rounded rectangular shape elongated in the first horizontal direction X in plan view.

The first electrode 31 includes a first electrode surface 31A. The first electrode surface 31A is a surface facing the downward direction Z2 side. The first electrode surface 31A is a surface parallel to the contact surface 23. That is, the first electrode surface 31A is a surface facing the conveyance belt 97 when welding the conveyance belt 97. In other words, the first electrode surface 31A is a surface facing the conveyance belt 97 side when welding the conveyance belt 97.

The second electrode 32 has a flat plate shape. The second electrode 32 includes a second electrode surface 32A. The second electrode surface 32A is a surface facing the downward direction Z2 side. The second electrode surface 32A is a surface parallel to the contact surface 23. That is, the second electrode surface 32A is a surface facing the conveyance belt 97 when welding the conveyance belt 97. In other words, the second electrode surface 32A is a surface facing the conveyance belt 97 side when welding the conveyance belt 97.

The second electrode 32 has a rounded rectangular shape at an outer periphery 32B in plan view. The outer periphery 32B is located inside the inner wall of the housing case 21. That is, the second electrode 32 is housed inside the housing case 21 in plan view. In this manner, the first electrode 31 and the second electrode 32 are covered with the housing case 21.

The second electrode 32 includes an opening 32C. The opening 32C has a rounded rectangular shape in plan view. That is, the second electrode 32 has a rounded rectangular shape at an inner periphery 32D in plan view. The second electrode 32 is disposed surrounding the first electrode 31 in plan view. The downward direction Z2 is the direction toward the conveyance belt 97 when welding the conveyance belt 97.

The first electrode 31 is provided such that the first electrode surface 31A faces the contact part 22. The second electrode 32 is provided such that the second electrode surface 32A faces the contact part 22. In this manner, the contact part 22 is provided to face the first electrode surface 31A and the second electrode surface 32A between the first electrode surface 31A and the second electrode surface 32A, and the conveyance belt 97 when welding the conveyance belt 97.

The first electrode 31 and the second electrode 32 are provided such that the first electrode surface 31A and the second electrode surface 32A come into contact with the contact part 22. The first electrode 31 and the second electrode 32 may be provided such that a gap is formed between the first electrode surface 31A and the second electrode surface 32A, and the contact part 22.

The first electrode 31 and the second electrode 32 are provided such that the first electrode surface 31A and the second electrode surface 32A are included in the contact surface 23 in plan view. Specifically, the first electrode 31 and the second electrode 32 are covered with the contact part 22 as viewed from the downward direction Z2. In this manner, the conveyance belt 97 and the contact surface 23 come into contact with each other when welding the conveyance belt 97, and thus the first electrode 31 and the second electrode 32 are protected from the contact with the conveyance belt 97.

The first electrode 31 and the second electrode 32 are covered with the housing 20, and thus are not exposed from the housing 20. In this manner, the first electrode 31 and the second electrode 32 are provided so as not to come into contact with the peripheral devices and the operator.

The first conductor 33 is configured to electrically couple the transmission line 13 and the first electrode 31. Specifically, the first conductor 33 is configured to electrically couple the inner conductor 13A and the first electrode 31. The first conductor 33 includes a coil 35. The coil 35 extends in the vertical direction Z.

The second conductor 34 is configured to electrically couple the transmission line 13 and the second electrode 32. Specifically, the second conductor 34 is configured to electrically couple the outer conductor 13B and the second electrode 32.

The second conductor 34 may include a first supporting part 34A. The second conductor 34 may include a plurality of the first supporting parts 34A. The second conductor 34 may include a second supporting part 34B.

The first supporting part 34A is electrically coupled to the second electrode 32. The first supporting part 34A extends in the upward direction Z1 from the second electrode 32. The first supporting part 34A may have a flat plate shape. The first supporting part 34A may have the same width as the second electrode 32 in the second horizontal direction Y. The first supporting part 34A may have a flat plate shape with a small thickness with respect to the first horizontal direction X. The first supporting part 34A is configured to be short in the first horizontal direction X, and long in the vertical direction Z to maintain the distance from the first electrode 31 and the second electrode 32 in the vertical direction Z while ensuring the rigidity. The first supporting part 34A may be made of metal. The first supporting part 34A is configured to support the second supporting part 34B.

The second supporting part 34B is electrically coupled to the first supporting part 34A. The second supporting part 34B is provided at the upper end portion of the first supporting part 34A. The second supporting art 34B may be integrated with the first supporting part 34A. The second supporting part 34B may have a flat plate shape. The second supporting part 34B may have a flat plate shape with a small thickness with respect to the vertical direction Z. The second supporting part 34B may have an H-shape in plan view. The second supporting part 34B may be made of metal.

The second conductor 34 may include a shield part 36. The shield part 36 is configured to seamlessly cover the first electrode 31 and the second electrode 32 from the upward direction Z1 side. The shield part 36 has a function of suppressing the propagation of electromagnetic waves from the first electrode 31 and the second electrode 32. The shield part 36 has a net shape, and therefore a part of the shield part 36 is illustrated in a net-shaped pattern in FIG. 3.

The shield part 36 is electrically coupled to the second electrode 32. The shield part 36 is in line contact with the second electrode 32, but may be in point contact with the second electrode 32. The shield part 36 is provided to surround the entire region of the outer periphery 32B of the second electrode 32 in plan view. The shield part 36 extends in the upward direction Z1 from the second electrode 32.

The shield part 36 is electrically coupled to the first supporting part 34A. The shield part 36 may be located outside the first supporting part 34A. The shield part 36 is electrically coupled to the second supporting part 34B. The shield part 36 may be located on the upward direction Z1 side of the second supporting part 34B. The shield part 36 is supported by the first supporting part 34A and the second supporting part 34B.

The shield part 36 may be provided at a position separated by a predetermined distance from the inner wall of the housing case 21. In other words, the housing case 21 may be provided at a position separated by a predetermined distance from the outer wall of the shield part 36. In this manner, the housing case 21 covers the first electrode 31, the second electrode 32, the first conductor 33 and the second conductor 34. The predetermined distance may be a distance with which the parasitic capacitance generated between the housing case 21 and the shield part 36 is a predetermined capacitance or smaller.

The shield part 36 may be made of metal. The shield part 36 may have a net shape. In this manner, the second conductor 34 may have a net shape in whole or in part. Specifically, at least a part of the second conductor 34 may have transmissivity. In addition, contrary to the shield part 36, the first supporting part 34A and the second supporting part 34B are composed in a minimum size to increase the visibility while ensuring the rigidity of the shield part 36.

With the electromagnetic wave generation unit 11 configured in this manner, the first electrode 31 and the second electrode 32 heat the conveyance belt 97 by generating electromagnetic waves in response to the application of the high-frequency voltage when a high-frequency voltage is applied through the transmission line 13. The first electrode 31 and the second electrode 32 can weld the conveyance belt 97 by heating the conveyance belt 97 at a predetermined temperature for a predetermined time. By pressing the conveyance belt 97 against the support stand 94 with the contact surface 23 in contact with the conveyance belt 97, the conveyance belt 97 is pressed at a predetermined pressure between the contact surface 23 and the support stand 94.

This electromagnetic wave generation unit 11 can transmit a large heat energy to the conveyance belt 97 through the generation of electromagnetic waves. As a specific example, the electromagnetic wave generation unit 11 can transmit a large heat energy of 100 W to 500 W to the conveyance belt 97 by generating electromagnetic waves to heat the conveyance belt 97 to approximately 160 degrees.

The electromagnetic wave generation unit 11 is an electromagnetic wave system, not a heat conduction system, and therefore may not include members such as electric heating wires for heating. In this manner, the electromagnetic wave generation unit 11 can be downsized. In this manner, the conveyance belt 97 can be welded by the electromagnetic wave generation unit 11 by using the extra space of the recording apparatus 90 without disassembling the apparatus housing 92 of the recording apparatus 90.

In addition, the electromagnetic wave generation unit 11 has a size that can be grabbed by the operator with one hand. The electromagnetic wave generation unit 11 is smaller than the width of the conveyance belt 97 although it depends on the size of the conveyance belt 97. In addition, it has a weight that can be moved in the state of being grabbed by the operator along with the welding of the conveyance belt 97, and can press the conveyance belt 97.

In addition, the minimum distance between the first electrode 31 and the second electrode 32 is 1/10 or smaller of the wavelength of the electromagnetic waves output from the electromagnetic wave generation unit 11. In this manner, most of electromagnetic waves that are generated in the application of the high-frequency voltage can be attenuated in the vicinity of the first electrode 31 and the second electrode 32. In this manner, the intensity of the electromagnetic waves that reach remote locations from the first electrode 31 and the second electrode 32 can be reduced. Specifically, the electromagnetic waves generated from the electromagnetic wave generation unit 11 are very strong in the vicinity of the first electrode 31 and the second electrode 32, but are very weak at a remote location.

This electromagnetic wave generation unit 11 can intensively generate the alternating current electric field in the vicinity of the first electrode 31 and the second electrode 32 when the frequency band of the generated electromagnetic waves is appropriately controlled. In other words, the influence of the generation of electromagnetic waves on the surroundings beyond the vicinity of the first electrode 31 and the second electrode 32 can be suppressed. The vicinity of the first electrode 31 and the second electrode 32 may correspond to a range of 3 mm to 3 cm, for example.

### Operations and Effects of First Embodiment

Operations and effects of the first embodiment are described below.

(1-1) In some situation replacement of the conveyance belt 97 becomes necessary due to age-related deterioration. In such case, in the related art, in replacement of the conveyance belt 97, the conveyance belt 97 is welded by heating the conveyance belt 97 in a sandwiched and pressed state. However, this results in the increase in the size of the conveyance belt welding apparatus provided with the above-mentioned function. In particular, since the conveyance belt 97 is heated by the heat conduction system with no generation of electromagnetic waves, electric heating wires for heating and metal members for heat conduction have to be used, resulting in the increase in the size of the conveyance belt welding apparatus. As a result, the operation efficiency is reduced regardless of whether conveying the conveyance belt welding apparatus to the installation position of the recording apparatus, or conveying the recording apparatus to the installation position of the conveyance belt welding apparatus. In addition, the recording apparatus does not have the space for using the conveyance belt welding apparatus. This requires disassembly of the recording apparatus when using known conveyance belt welding apparatuses. This also reduces the operation efficiency.

In view of this, the first electrode 31 and the second electrode 32 weld the conveyance belt 97 by generating electromagnetic waves in response to the application of the high-frequency voltage. With this configuration, by generating electromagnetic waves in response to the application of the high-frequency voltage, high heat energy can be transmitted to the conveyance belt 97. Thus, the efficiency of the operation related to the welding of the conveyance belt 97 can be improved while ensuring the conveyance accuracy of the conveyance belt 97.

(1-2) In addition, when an electromagnetic wave system of generating electromagnetic waves is employed, the electromagnetic wave generation unit 11 can be downsized by comparison with the heat conduction system of not generating electromagnetic waves. In this manner, by reducing the size of the electromagnetic wave generation unit 11, it can be moved by being grabbed by the operator without the necessity of disassembling the apparatus housing 92 of the recording apparatus 90. Thus, the efficiency of the operation related to the welding of the conveyance belt 97 can be improved.

(1-3) The housing case 21 constitutes the inner space together with the contact part 22, and has an insulating property. In this manner, the first electrode 31 and the second electrode 32 can be housed in the inner space by using the contact part 22 and the housing case 21, and the direct contact of the first electrode 31 and the second electrode 32 with the surroundings can be suppressed. In addition, the insulating property from the first electrode 31 and the second electrode 32 can be ensured. Thus, the influence of the generation of electromagnetic waves on the surroundings can be suppressed.

Specifically, the electromagnetic wave generation unit 11 is downsized and can be grabbed by the operator, and thus further remarkable effects are provided. In addition, the first electrode 31 and the second electrode 32 are very small relative to the wavelength of the electromagnetic waves. In this manner, with the housing case 21 configured such that peripheral devices with a size close to the wavelength of the electromagnetic waves do not come into contact with the first electrode 31 and the second electrode 32, the influence of the generation of electromagnetic waves on the surroundings can be suppressed.

(1-4) The holding part 25 that can be grabbed by the operator is also insulated from the housing case 21. In this manner, the insulating property of the holding part 25, and the first electrode 31 and the second electrode 32 can be further ensured. Thus, the influence of the generation of electromagnetic waves on the surroundings can be suppressed.

(1-5) The holding part 25 is provided at a position separated from the first electrode 31 and the second electrode 32 than the housing case 21. In this manner, the distance between the holding part 25, and the first electrode 31 and the second electrode 32 can be ensured. Thus, the influence of the generation of electromagnetic waves on the surroundings can be suppressed. In particular, no problem occurs even when the holding part 25 is grabbed by the operator with bare hands, and the influence of the generation of electromagnetic waves can be suppressed.

(1-6) In the related art, the heat conduction system is used, and the conveyance belt 97 is heated in the state where the conveyance belt 97 is pressed with the conveyance belt 97 sandwiched by a metal plate. As such, the region for heating the conveyance belt 97 is covered with the metal plate, and the welding state of the conveyance belt 97 cannot be visually recognized.

In view of this, at least a part of the housing case 21 has transmissivity, and at least a part of the contact part 22 has transmissivity. With this configuration, the visibility of the region of the conveyance belt 97 in contact with the contact surface 23 can be improved through the housing case 21 and the contact part 22. In this manner, the welding state of the region of the conveyance belt 97 in contact with the contact surface 23 can be easily visually recognized. Thus, the efficiency of the operation related to the welding of the conveyance belt 97 can be improved.

In addition, since the welding state of the conveyance belt 97 is a delicate operation, the welding quality of the conveyance belt 97 can be improved by improving the visibility of the welding region of the conveyance belt 97.

Specifically, when the welding state of the conveyance belt 97 can be visually recognized in the case where the repair welding of the conveyance belt 97 is performed, the welding quality of the conveyance belt 97 can be improved, and the efficiency of the operation related to the welding of the conveyance belt 97 can be improved.

(1-7) The second conductor 34 has a net shape in whole or in part. With this configuration, through the second conductor 34 housed in the housing case 21, the visibility of the region of the conveyance belt 97 in contact with the contact surface 23 can be improved. In this manner, the welding state of the region of the conveyance belt 97 in contact with the contact surface 23 can be easily visually recognized. Thus, the efficiency of the operation related to the welding of the conveyance belt 97 can be improved.

### Second Embodiment

Next, a second embodiment is described. In the following description, the overlapping description of the same configurations as those of the above-described embodiment will be omitted or simplified, and the configurations different from those of the above-described embodiment will be mainly described.

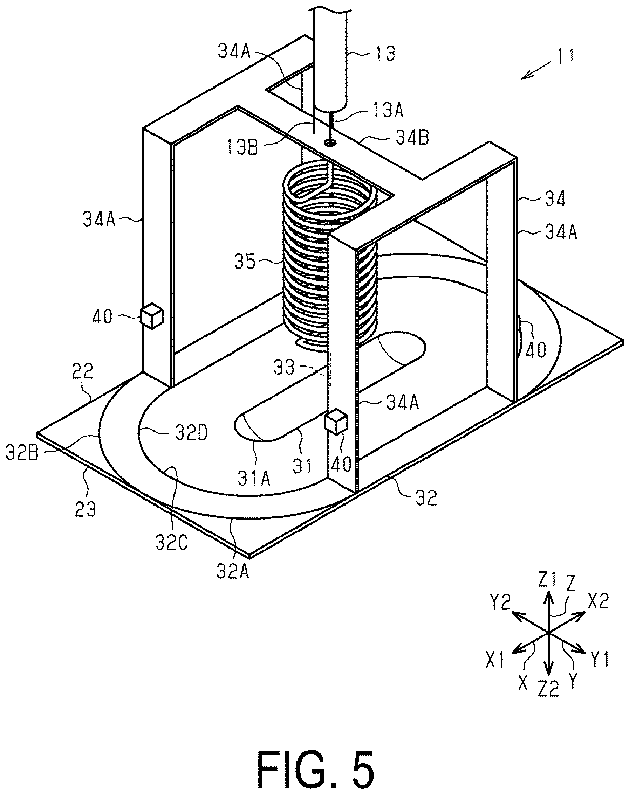

As illustrated in FIG. 5, in the second embodiment, the electromagnetic wave generation unit 11 may include an irradiation unit 40. That is, the conveyance belt welding apparatus 10 may include the irradiation unit 40. The irradiation unit 40 is attached to the second conductor 34, but it may be attached to the housing 20, or more specifically to the housing case 21.

The irradiation unit 40 may be configured to perform irradiation toward the downward direction Z2. In this manner, the irradiation unit 40 is configured to irradiate the conveyance belt 97 in contact with the contact part 22. In other words, the irradiation unit 40 is configured to irradiate the region of welding the conveyance belt 97 in whole or in part. Specifically, the irradiation unit 40 may be configured to irradiate the conveyance belt 97 at a peripheral portion of the first electrode 31 that is easily shadowed by the first electrode 31. The irradiation unit 40 may be configured to irradiate the conveyance belt 97 at a peripheral portion of the second electrode 32 that is easily shadowed by the second electrode 32. The irradiation unit 40 may include a light-emitting element such as an LED, for example.

### Operations and Effects of Second Embodiment

Operations and effects of the second embodiment are described below.

(2-1) The irradiation unit 40 is configured to irradiate the conveyance belt 97 in contact with the contact part 22. With this configuration, through the irradiation of the conveyance belt 97, the visibility of the conveyance belt 97 in contact with the contact surface 23 can be improved. In this manner, the welding state of the conveyance belt 97 in contact with the contact surface 23 can be easily visually recognized. Thus, the efficiency of the operation related to the welding of the conveyance belt 97 can be improved. Specifically, even when a part of the second conductor 34 has a net shape, the region where the conveyance belt 97 is welded can be visually recognized in a favorable state from the outside of the housing 20.

### Third Embodiment

Next, a third embodiment is described.

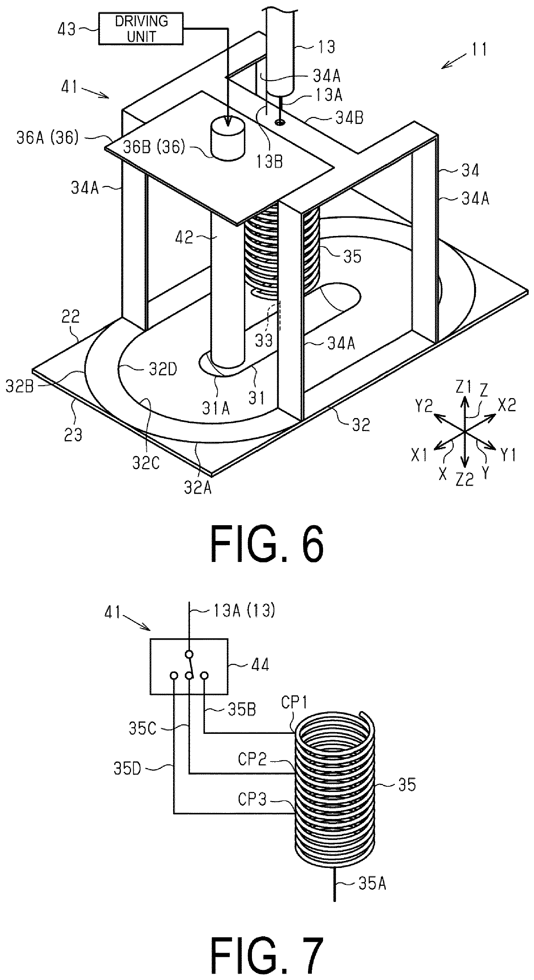

As illustrated in FIG. 6, in the third embodiment, the electromagnetic wave generation unit 11 may include a frequency adjusting unit 41. That is, the conveyance belt welding apparatus 10 may include the frequency adjusting unit 41. The frequency adjusting unit 41 can adjust the resonance frequency of the electromagnetic waves generated from the first electrode 31 and the second electrode 32.

The frequency adjusting unit 41 may include a third conductor 42 and a driving unit 43. That is, the electromagnetic wave generation unit 11 may include the third conductor 42 and the driving unit 43. In addition, the conveyance belt welding apparatus 10 may include the third conductor 42 and the driving unit 43.

The third conductor 42 is made of a non-magnetic metal. The third conductor 42 may have a rod shape, and may be provided with a thread formed in the outer peripheral surface. In the shield part 36, a top surface part 36A may be composed of a metal plate with a flat plate shape. The top surface part 36A may include a screw hole 36B. The third conductor 42 can be threadedly engaged with the screw hole 36B. The third conductor 42 is suspended at the shield part 36 by being screwed into the screw hole 36B. That is, the third conductor 42 is supported by the second conductor 34. The third conductor 42 is coupled to the second electrode 32 through the second conductor 34.

The third conductor 42 is disposed at a position separated from the coil 35 by a predetermined distance. By separating the third conductor 42 from the coil 35, generation of parasitic capacitance between the third conductor 42 and the coil 35 can be suppressed. In this manner, interference of the third conductor 42 with the operation of the coil 35 can be suppressed.

The driving unit 43 moves the third conductor 42. Specifically, the driving unit 43 moves the third conductor 42 in the vertical direction Z by rotating the third conductor 42 with respect to the top surface part 36A. In particular, the driving unit 43 can adjust the distance between the third conductor 42 and the first electrode 31 by moving the third conductor 42 in the vertical direction Z. The driving unit 43 may be a motor. The driving unit 43 may be coupled to the first control unit 14. The driving unit 43 may perform driving based on a signal from the first control unit 14. The first control unit 14 may drive the driving unit 43 based on an operation signal from the operation unit 15. That is, the driving unit 43 may move the third conductor 42 in response to the operation of the operation unit 15.

The electromagnetic wave generation unit 11 is equivalent to an LCR series resonance circuit. The LCR series resonance circuit is dependent on the interelectrode capacitance of the first electrode 31 and the second electrode 32, the inductance of the coil 35, and the parasitic resistance of the coil 35.

When the third conductor 42 is brought closer to the first electrode 31, parasitic capacitance is generated between the first electrode 31 and the second electrode 32. The parasitic capacitance is parallel to the capacitance formed between the first electrode 31 and the second electrode 32. In this manner, when the parasitic capacitance changes, the resonance frequency of the series LC resonance circuit also changes.

Note that when the parasitic resistance of the coil 35 increases, the heat energy transmitted to the conveyance belt 97 decreases. In view of this, for example, the resonance frequency is also changed by inserting a rod-shaped magnetic substance to the center of the coil 35 and adjusting the insertion amount, but it is not preferable because the parasitic resistance of the coil 35 increases.

In this manner, the resonance frequency of the electromagnetic waves generated from the first electrode 31 and the second electrode 32 can be changed by adjusting the distance between the third conductor 42 and the first electrode 31. Specifically, the frequency adjusting unit 41 adjusts the resonance frequency of the electromagnetic waves generated from the first electrode 31 and the second electrode 32 by adjusting the distance between the first electrode 31 and the third conductor 42. In particular, the frequency adjusting unit 41 can change the resonance frequency by a small adjustment width by adjusting the distance between the first electrode 31 and the third conductor 42. For example, the adjustment width of the resonance frequency may be approximately 1.5 MHz, and may be approximately 0.1 MHz to 0.5 MHz.

As illustrated in FIG. 7, the frequency adjusting unit 41 may include a coupling position switching unit 44. That is, the electromagnetic wave generation unit 11 may include the coupling position switching unit 44. In addition, the conveyance belt welding apparatus 10 may include the coupling position switching unit 44.

The coupling position switching unit 44 is configured to switch the coupling position of the coil 35 coupled to the inner conductor 13A. The coupling position switching unit 44 may be configured to switch the coupling position of the coil 35 coupled to the inner conductor 13A through operation of the operation unit 15. The coil 35 is coupled to the first electrode 31 through a coupling conductive wire 35A. The coupling conductive wire 35A may be coupled to the coil 35 at one end portion of the coil 35 on the downward direction Z2 side.

The coil 35 includes a plurality of conductive wires that can be coupled to the inner conductor 13A. The coil 35 may include a first conductive wire 35B, a second conductive wire 35C, and a third conductive wire 35D as the plurality of conductive wires. In this manner, the coil 35 has a plurality of coupling positions. The plurality of coupling positions are positions coupled to a plurality of respective conductive wires. The plurality of coupling positions is provided along the extending direction of the coil. The coil 35 may have a first coupling position CP1, a second coupling position CP2, and a third coupling position CP3 as the plurality of coupling positions. A first conductive wire 35B is coupled to the coil 35 at the first coupling position CP1. The second conductive wire 35C is coupled to the coil 35 at the second coupling position CP2. The third conductive wire 35D is coupled to the coil 35 at the third coupling position CP3.

The first coupling position CP1, the second coupling position CP2 and the third coupling position CP3 are provided along the extending direction of the coil 35. The first coupling position CP1 is located on the upward direction Z1 side than the second coupling position CP2. That is, the first coupling position CP1 is farther from the coupling conductive wire 35A than the second coupling position CP2. The second coupling position CP2 is located on the upward direction Z1 side than the third coupling position CP3. That is, the second coupling position CP2 is farther from the coupling conductive wire 35A than the third coupling position CP3.

The coupling position switching unit 44 can switch the coupling destination of the inner conductor 13A among the first conductive wire 35B, the second conductive wire 35C and the third conductive wire 35D. The coupling position switching unit 44 can adjust the inductance of the coil 35 based on the coupling destination of the inner conductor 13A among the first conductive wire 35B, the second conductive wire 35C and the third conductive wire 35D. In this manner, the coupling position switching unit 44 adjusts the resonance frequency of the electromagnetic waves generated from the first electrode 31 and the second electrode 32.

In this manner, the coupling position switching unit 44 can switch the coupling position of the transmission line 13 among the plurality of coupling positions along the extending direction of the coil 35. The coupling position switching unit 44 adjusts the resonance frequency of the electromagnetic waves generated from the first electrode 31 and the second electrode 32 by switching the coupling position of the transmission line 13. In particular, the frequency adjusting unit 41 can largely change the resonance frequency stepwise by switching the coupling position of the transmission line 13. For example, the resonance frequency can be changed from approximately 13 MHz to approximately 7 MHz.

### Operations and Effects of Third Embodiment

Operations and effects of the third embodiment are described below.

(3-1) In the related art, there is a need to weld the conveyance belt 97 under a condition corresponding to the type of the conveyance belt 97 to be welded such as the material, layered structure, and thickness of the conveyance belt 97. However, the suitable welding condition of the conveyance belt 97 differs depending on the manufacturing company and the manufacturing process, and even when manufactured by the same manufacturing company and the same manufacturing process, the suitable welding condition differs depending on the production lot.

In view of this, the frequency adjusting unit 41 can adjust the resonance frequency of the electromagnetic waves generated from the first electrode 31 and the second electrode 32. With this configuration, the resonance frequency of the electromagnetic waves can be adjusted in accordance with the welding condition of the conveyance belt 97. Thus, the welding quality of the conveyance belt 97 can be improved, and the efficiency of the operation related to the welding of the conveyance belt 97 can be improved.

(3-2) The frequency adjusting unit 41 can adjust the resonance frequency of the electromagnetic waves generated from the first electrode 31 and the second electrode 32 by adjusting the distance between the first electrode 31 and the third conductor 42. With this configuration, the resonance frequency of the electromagnetic waves can be adjusted with a simple configuration for adjusting the distance between the first electrode 31 and the third conductor 42. Thus, the welding quality of the conveyance belt 97 can be improved, and the efficiency of the operation related to the welding of the conveyance belt 97 can be improved.

(3-3) The frequency adjusting unit 41 includes the driving unit 43 that moves the third conductor 42. With this configuration, the distance between the first electrode 31 and the third conductor 42 can be adjusted by the driving unit 43, and the resonance frequency of the electromagnetic waves can be adjusted. Thus, the welding quality of the conveyance belt 97 can be improved, and the efficiency of the operation related to the welding of the conveyance belt 97 can be improved.

(3-4) The frequency adjusting unit 41 can adjust the resonance frequency of the electromagnetic waves generated from the first electrode 31 and the second electrode 32 by switching the coupling position of coupling the inner conductor 13A. With this configuration, the resonance frequency of the electromagnetic waves can be adjusted with the simple configuration of switching the coupling position of the coil 35 and the inner conductor 13A. Thus, the welding quality of the conveyance belt 97 can be improved, and the efficiency of the operation related to the welding of the conveyance belt 97 can be improved.

(3-5) It is possible to achieve both the adjustment of the resonance frequency with a large adjustment width through the switching of the coupling position of the coil 35, and the adjustment of the resonance frequency with a small adjustment width through the adjustment of the distance between the first electrode 31 and the third conductor 42. In the case of a different type of the conveyance belt 97, the conveyance belt 97 can be welded under a suitable welding condition by adjusting the resonance frequency with a large adjustment width. In the case of a different production lot of the conveyance belt 97, the conveyance belt 97 can be welded under a suitable welding condition by adjusting the resonance frequency with a small adjustment width. Thus, the welding quality of the conveyance belt 97 can be improved, and the efficiency of the operation related to the welding of the conveyance belt 97 can be improved.

### Fourth Embodiment

Next, a fourth embodiment is described.

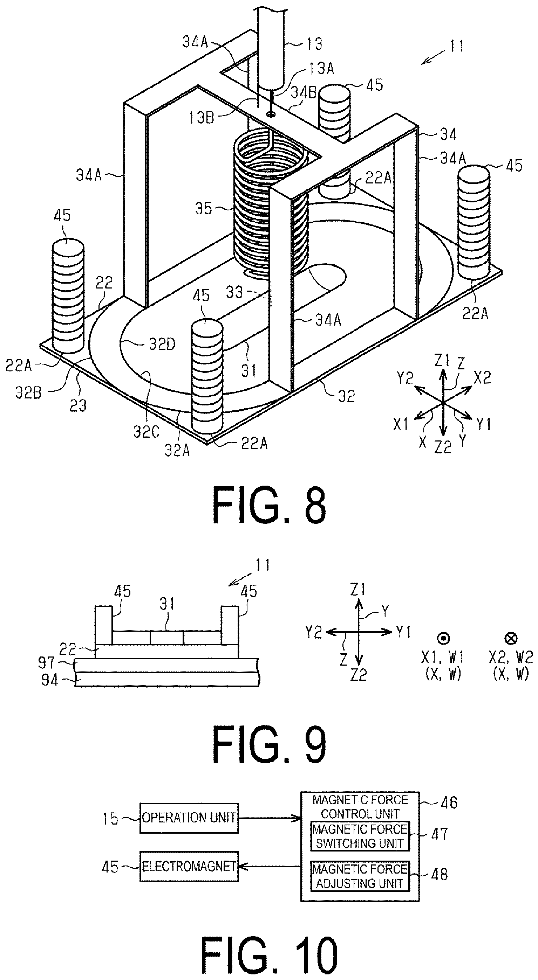

As illustrated in FIGS. 8 and 9, in the fourth embodiment, the electromagnetic wave generation unit 11 may include an electromagnet 45. That is, the conveyance belt welding apparatus 10 may include the electromagnet 45. The electromagnet 45 can generate a magnetic force. The electromagnet 45 can generate a magnetic force to the downward direction Z2 side. When the conveyance belt 97 is sandwiched between the contact surface 23 and the support surface 94A of the support stand 94, the electromagnet 45 can generate a magnetic force to the support surface 94A.

The electromagnet 45 is provided outside the inner periphery 32D of the second electrode 32 in plan view. Specifically, the electromagnet 45 is provided outside the outer periphery 32B of the second electrode 32 in plan view. In addition, the electromagnet 45 is provided at a corner portion 22A constituting the outer edge the contact part 22.

In this manner, when the conveyance belt 97 is sandwiched between the contact surface 23 and the support surface 94A, the electromagnet 45 and the support surface 94A attract each other when a magnetic force is generated from the electromagnet 45 toward the downward direction Z2 side. In this manner, the contact surface 23 can be pressed against the support surface 94A in the state where the conveyance belt 97 is sandwiched between the contact surface 23 and the support surface 94A.

As illustrated in FIG. 10, the electromagnetic wave generation unit 11 may include a magnetic force control unit 46. The magnetic force control unit 46 may be provided in the first control unit 14, or may be provided separately from the first control unit 14. The magnetic force control unit 46 is configured to control the magnetic force generated from the electromagnet 45. The magnetic force control unit 46 is configured to control the magnetic force generated from the electromagnet 45 in response to the operation of the operation unit 15. In this manner, the magnetic force generated from the electromagnet 45 can be controlled by the operator.

The magnetic force control unit 46 may include a magnetic force switching unit 47. That is, the conveyance belt welding apparatus 10 may include the magnetic force switching unit 47. The magnetic force switching unit 47 can switch whether to generate the magnetic force from the electromagnet 45. The magnetic force switching unit 47 can switch whether to generate the magnetic force from the electromagnet 45 in response to the operation of the operation unit 15.

The magnetic force control unit 46 may include a magnetic force adjusting unit 48. That is, the conveyance belt welding apparatus 10 may include the magnetic force adjusting unit 48. The magnetic force adjusting unit 48 can adjust the intensity of the magnetic force generated from the electromagnet 45. The magnetic force adjusting unit 48 can adjust the intensity of the magnetic force generated from the electromagnet 45 in response to the operation of the operation unit 15.

As a specific example, when welding the conveyance belt 97, the contact surface 23 can be pressed against the support surface 94A by generating a strong magnetic force from the electromagnet 45. In addition, the electromagnetic wave generation unit 11 can be moved while maintaining the contact between the contact surface 23 and the conveyance belt 97 by generating a weak magnetic force from the electromagnet 45.

### Operations and Effects of Fourth Embodiment

Operations and effects of the fourth embodiment are described below.

(4-1) The electromagnetic wave generation unit 11 includes the electromagnet 45 that can generate a magnetic force to the downward direction Z2. With this configuration, the electromagnet 45 can press the conveyance belt 97 in contact with the contact surface 23 by generating the magnetic force between it and the support stand 94 made of metal. In this manner, the adhesion between the contact surface 23 and the conveyance belt 97 can be improved. Thus, the welding quality of the conveyance belt 97 can be improved, and the efficiency of the operation related to the welding of the conveyance belt 97 can be improved.

In particular, even in the case where a small gap is formed between the conveyance belt 97 and the support surface 94A when the conveyance belt 97 is placed on the support surface 94A, the adhesion between the contact surface 23 and the conveyance belt 97 can be improved with the magnetic force from the electromagnet 45.

In addition, in the related art, the heat conduction system is employed, and when welding the conveyance belt 97, the metal plates on both sides are heated by pressing them with a predetermined pressure in the state where the conveyance belt 97 is sandwiched with the metal plates on both the upward direction Z1 side and the downward direction Z2 side. With this configuration, the size of the conveyance belt welding apparatus cannot be reduced, and the operation efficiency is degraded. In view of this, the conveyance belt 97 can be pressed by using the electromagnet 45. In this manner, the electromagnetic wave generation unit 11 can be downsized. Thus, the efficiency of the operation related to the welding of the conveyance belt 97 can be improved.

(4-2) The electromagnet 45 is provided outside the inner periphery 32D of the second electrode 32 in plan view. With this configuration, the strong electric field is not generated between the electromagnet 45 and the first electrode 31, and the interference with the electromagnetic waves generated from the first electrode 31 and the second electrode 32 can be suppressed. Specifically, it is possible to reduce the influence on the electromagnetic waves generated from the first electrode 31 and the second electrode 32 upon generation of the magnetic force from the electromagnet 45. In addition, the contact part 22 can be pressed against the support surface 94A without separating the electromagnet 45 extremely away from the support surface 94A while maintaining the distance between the first electrode 31 and the second electrode 32, and the conveyance belt 97. Thus, the welding quality of the conveyance belt 97 can be improved, and the efficiency of the operation related to the welding of the conveyance belt 97 can be improved.

(4-3) In plan view, the electromagnet 45 is provided outside the outer periphery 32B of the second electrode 32, and at the corner portion 22A constituting the outer edge of the contact part 22. With this configuration, with the electromagnet 45 provided outside the outer periphery 32B of the second electrode 32, the influence on the electromagnetic waves generated from the first electrode 31 and the second electrode 32 can be reduced. In addition, with the electromagnet 45 provided at the corner portion 22A, the contact surface 23 can be equally brought into intimate contact with the conveyance belt 97. Thus, the welding quality of the conveyance belt 97 can be improved, and the efficiency of the operation related to the welding of the conveyance belt 97 can be improved.

(4-4) The magnetic force switching unit 47 can switch whether to generate the magnetic force from the electromagnet 45. With this configuration, whether to generate the magnetic force from the electromagnet 45 can be switched. Thus, the welding quality of the conveyance belt 97 can be improved, and the efficiency of the operation related to the welding of the conveyance belt 97 can be improved.

(4-5) The magnetic force adjusting unit 48 can adjust the intensity of the magnetic force generated from the electromagnet 45. With this configuration, the intensity of the magnetic force generated from the electromagnet 45 can be adjusted. Thus, the welding quality of the conveyance belt 97 can be improved, and the efficiency of the operation related to the welding of the conveyance belt 97 can be improved.

### Fifth Embodiment

Next, a fifth embodiment is described.

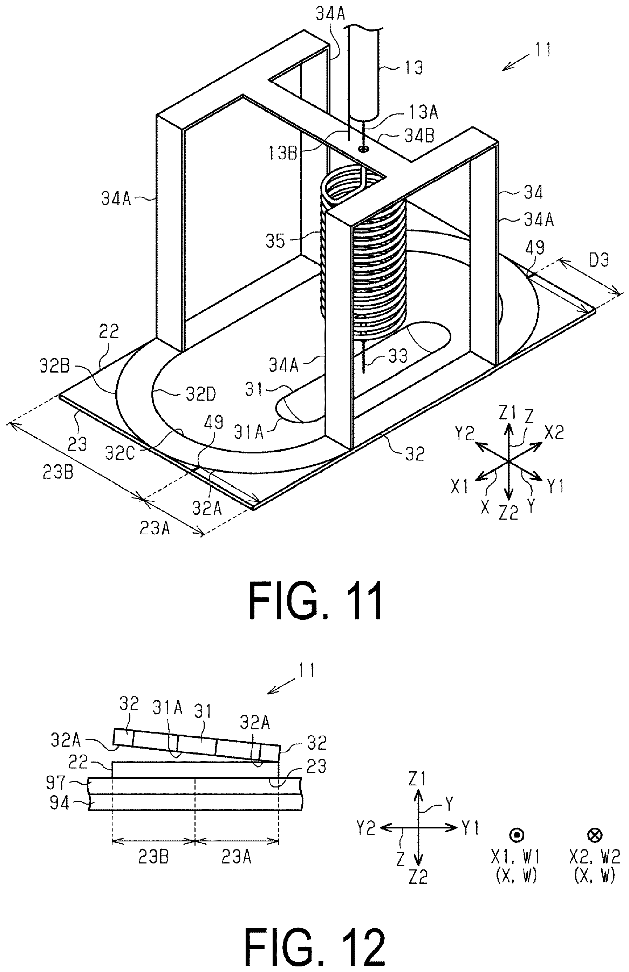

As illustrated in FIG. 11, in the fifth embodiment, the electromagnetic wave generation unit 11 includes a movement indication part 49. That is, the conveyance belt welding apparatus 10 includes the movement indication part 49. The movement indication part 49 may be provided in the housing 20. Specifically, the movement indication part 49 may be provided in the contact part 22.

The movement indication part 49 is an indication of the movement reference of the electromagnetic wave generation unit 11 with respect to the conveyance belt 97. Specifically, the movement indication part 49 is an indication of the movement reference of the contact part 22 with respect to the conveyance belt 97.

Specifically, the movement indication part 49 may be an indication that indicates the movement direction of the contact part 22 with respect to the conveyance belt 97. That is, the movement indication part 49 can indicate the movement direction of the contact part 22 with respect to the conveyance belt 97. The movement indication part 49 is an indication that indicates the movement amount of the contact part 22 with respect to the conveyance belt 97. That is, the movement indication part 49 can indicate the movement amount of the contact part 22 with respect to the conveyance belt 97. As a specific example, the movement indication part 49 indicates the one direction Y1 in the second horizontal direction Y as the movement direction of the contact part 22, and indicates a distance D3 as the movement amount of the contact part 22. The movement amount of the contact part 22 may be the length of a first contact surface 23A in the second horizontal direction Y.

The first electrode 31 may be provided such that it is eccentric from the center of the region surrounded by the inner periphery 32D of the second electrode 32 in plan view with respect to the movement direction in which the electromagnetic wave generation unit 11 is moved. Specifically, the first electrode 31 may be provided at a position where it is eccentric from the center of the region surrounded by the inner periphery 32D of the second electrode 32 in plan view with respect to the one direction Y1 in the second horizontal direction Y.

In this case, the contact surface 23 includes the first contact surface 23A and a second contact surface 23B. The first contact surface 23A is a region located on the one direction Y1 side in the second horizontal direction Y than the first electrode 31. The second contact surface 23B is a region located on the other direction Y2 side in the second horizontal direction Y than the first electrode 31. Specifically, the first contact surface 23A is located on the eccentric direction side of the first electrode 31, and the second contact surface 23B is located on the side opposite to the eccentric direction side of the first electrode 31.

The first contact surface 23A is a region where the first electrode 31 and the second electrode 32 are close in comparison with the second contact surface 23B. In this manner, in the first contact surface 23A, stronger electromagnetic waves are generated from the first electrode 31 and the second electrode 32 in comparison with the second contact surface 23B. As such, the first contact surface 23A is a contact surface that generates stronger electromagnetic waves than the second contact surface 23B.

The first contact surface 23A is located on the movement direction side of the electromagnetic wave generation unit 11 than the second contact surface 23B. By moving the electromagnetic wave generation unit 11 along the movement direction with the conveyance belt 97 in contact with the contact surface 23, the first contact surface 23A comes into contact with the region of the conveyance belt 97 that has not been heated. In this manner, a large heat energy can be transmitted to the region of the conveyance belt 97 that has not been heated, and thus the heating of the region of the conveyance belt 97 can be facilitated.

Then, after some time has elapsed, the electromagnetic wave generation unit 11 is moved along the movement direction with the conveyance belt 97 in contact with the contact surface 23, and thus the second contact surface 23B comes into contact with the region of the conveyance belt 97 that has been heated by the first contact surface 23A. In this manner, the temperature of the region of the conveyance belt 97 that has been heated can be maintained without excessively heating the region of the conveyance belt 97 that has been heated.

In this manner, when moving the electromagnetic wave generation unit 11 along the movement direction, the movement direction and movement amount of the contact part 22 can be visually recognized by the operator from the movement indication part 49. In this manner, the welding of the conveyance belt 97 can be performed in accordance with the movement reference of the electromagnetic wave generation unit 11 with respect to the conveyance belt 97.

### Operations and Effects of Fifth Embodiment

Operations and effects of the fifth embodiment are described below.

(5-1) In the case where the electromagnetic wave generation unit 11 is downsized such that the electromagnetic wave generation unit 11 is smaller than the conveyance belt 97, it is necessary to move the electromagnetic wave generation unit 11 when welding the conveyance belt 97. In this case, it is desired to improve the welding quality of the conveyance belt 97 by appropriately heating the conveyance belt 97.

In view of this, the electromagnetic wave generation unit 11 includes the movement indication part 49 that can indicate the movement amount of the contact part 22 with respect to the conveyance belt 97. With this configuration, the contact part 22 can be moved with reference to the indicated movement amount of the contact part 22. Thus, the efficiency of the operation related to the welding of the conveyance belt 97 can be improved.

(5-2) In addition, it is desired to improve the operation efficiency by increasing the heating efficiency of the conveyance belt 97. As a specific example, for the conveyance belt 97, it is desired to shorten the time to reach the temperature required for the welding from the non-heated state. Meanwhile, for the conveyance belt 97, it is desired to prevent excessive heating without continuing over long periods of time the state of being heated at the temperature required for welding.

In this manner, the contact surface 23 includes the first contact surface 23A and the second contact surface 23B, and the first contact surface 23A is a region that generates stronger electromagnetic waves than the second contact surface 23B. With this configuration, the heat energy to be transmitted to the conveyance belt 97 can be adjusted based on whether the first contact surface 23A or the second contact surface 23B is to be brought into contact with the conveyance belt 97. Thus, the welding quality of the conveyance belt 97 can be improved, and the efficiency of the operation related to the welding of the conveyance belt 97 can be improved.

(5-3) The first electrode 31 is provided such that it is eccentric from the center of the region surrounded by the inner periphery 32D of the second electrode 32 in plan view. The first contact surface 23A is located on the eccentric direction side of the first electrode 31. With this configuration, with the simple configuration in which the first electrode 31 is eccentric from the center of the region surrounded by the inner periphery 32D of the second electrode 32, the distance between the first electrode 31 and the second electrode 32 can be adjusted. In this manner, the intensity of the electromagnetic waves generated from the first electrode 31 and the second electrode 32 can be adjusted. In this manner, the first contact surface 23A and the second contact surface 23B can be made to function by adjusting the heat energy to be transmitted to the conveyance belt 97. Thus, the welding quality of the conveyance belt 97 can be improved, and the efficiency of the operation related to the welding of the conveyance belt 97 can be improved.

### Sixth Embodiment

Next, a sixth embodiment is described.

As illustrated in FIG. 12, in the sixth embodiment, the first electrode surface 31A and the second electrode surface 32A may be tilted, rather than horizontal, to the contact surface 23. Assuming that the one direction Y1 in the second horizontal direction Y is the movement direction of the contact part 22, the first electrode surface 31A and the second electrode surface 32A are tilted such that the end portion on the one direction Y1 side in the second horizontal direction Y is lower than the end portion on the other direction Y2 side. In this manner, the first contact surface 23A is located on the side of the contact surface 23 in which the distance to the first electrode surface 31A and the second electrode surface 32A is closer than in the second contact surface 23B. In this manner, the first contact surface 23A serves as a contact surface that generates stronger electromagnetic waves than the second contact surface 23B.

### Operations and Effects of Sixth Embodiment

Operations and effects of the sixth embodiment are described below.

(6-1) The first electrode surface 31A and the second electrode surface 32A are tilted to the contact surface 23. The first contact surface 23A is located on the side of the contact surface 23 in which the distance to the first electrode surface 31A and the second electrode surface 32A is closer. With this configuration, with the simple configuration in which the first electrode surface 31A and the second electrode surface 32A are tilted to the contact surface 23, the distance between the first electrode surface 31A and the second electrode surface 32A and the conveyance belt 97 can be adjusted. In this manner, the first contact surface 23A and the second contact surface 23B can be made to function by adjusting the heat energy to be transmitted to the conveyance belt 97. Thus, the welding quality of the conveyance belt 97 can be improved, and the efficiency of the operation related to the welding of the conveyance belt 97 can be improved.

### Seventh Embodiment

Next, a seventh embodiment is described.

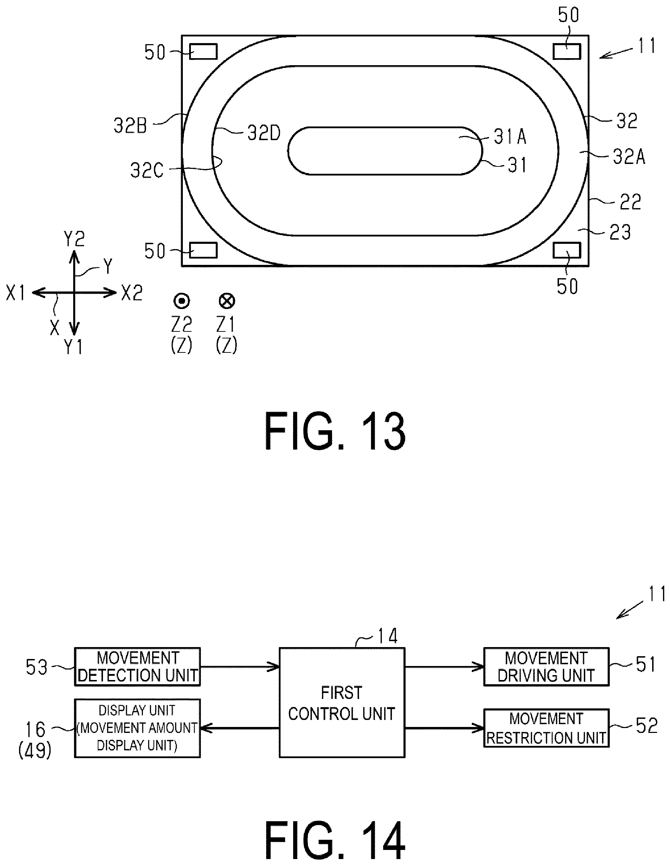

As illustrated in FIG. 13, in the seventh embodiment, the electromagnetic wave generation unit 11 may include a movement roller 50. The electromagnetic wave generation unit 11 may include a plurality of the movement rollers 50. The movement roller 50 may be provided in the contact part 22. The movement roller 50 may be slightly protruded from the contact surface 23. The movement roller 50 assists the movement of the electromagnetic wave generation unit 11 in a state where it is in contact with the conveyance belt 97. The movement roller 50 rotates around the rotation axis along the first horizontal direction X. Specifically, the movement roller 50 rotates around the rotation axis extending along the horizontal direction intersecting the movement direction of the contact part 22. The movement roller 50 rotates along with the movement of the electromagnetic wave generation unit 11.

As illustrated in FIG. 14, the electromagnetic wave generation unit 11 may include a movement driving unit 51. The movement driving unit 51 is a driving source for rotating the movement roller 50. In other words, the movement driving unit 51 is a driving source that moves the contact part 22. The movement driving unit 51 may be a motor. The movement driving unit 51 rotates the movement roller 50 based on a signal from the first control unit 14. The movement driving unit 51 can rotate the movement roller 50 such that the contact part 22 moves at a predetermined speed based on a signal from the first control unit 14. The predetermined speed corresponds to an appropriate speed for performing the welding of the conveyance belt 97.

The electromagnetic wave generation unit 11 may include a movement restriction unit 52. The movement restriction unit 52 restricts the rotation of the movement roller 50. Specifically, the movement restriction unit 52 restricts the movement of the electromagnetic wave generation unit 11 through restriction of the rotation of the movement roller 50. In other words, the movement restriction unit 52 is configured to restrict the movement of the contact part 22. The movement restriction unit 52 may be a stopper that fixes the movement roller 50. The movement restriction unit 52 switches whether to restrict the rotation of the movement roller 50 based on a signal from the first control unit 14.

The electromagnetic wave generation unit 11 may include a movement detection unit 53. The movement detection unit 53 detects the movement amount of the electromagnetic wave generation unit 11. The movement detection unit 53 detects the movement amount of the electromagnetic wave generation unit 11 based on the rotation amount of the movement roller 50. The movement detection unit 53 outputs a signal corresponding to the rotation amount of the movement roller 50 to the first control unit 14. In this manner, the first control unit 14 can identify the movement amount of the electromagnetic wave generation unit 11 based on the signal from the movement detection unit 53.

The first control unit 14 may display information related to the movement amount of the electromagnetic wave generation unit 11 on the display unit 16. As a specific example, the first control unit 14 may display the movement amount of the electromagnetic wave generation unit 11 serving as a reference on the display unit 16. The first control unit 14 may display the movement amount of the electromagnetic wave generation unit 11 on the display unit 16 based on the detection result of the movement detection unit 53. In this manner, the display unit 16 can display the movement amount of the contact part 22 with respect to the conveyance belt 97. In this case, the display unit 16 may serve as an example of the movement indication part 49.

### Movement Controlling Processing

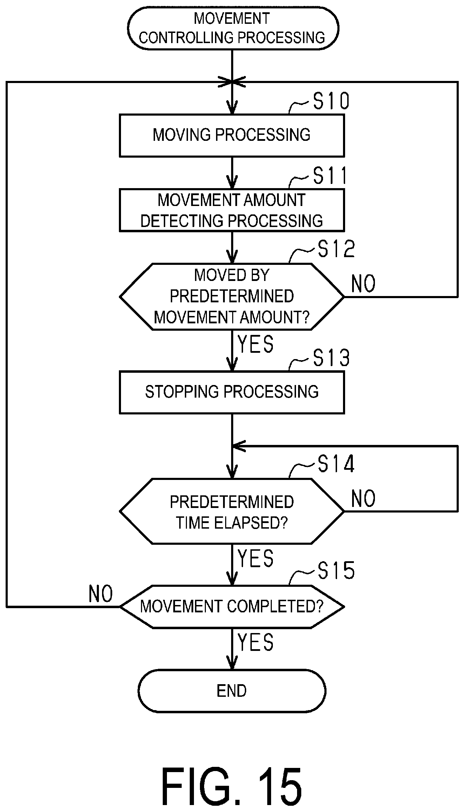

Movement controlling processing is described below with reference to FIG. 15. The movement controlling processing is processing executed by the first control unit 14 for each predetermined cycle. The movement controlling processing may be processing executed by the first control unit 14 for each predetermined cycle when electromagnetic waves are being generated.

As illustrated in FIG. 15, at step S10, the first control unit 14 executes moving processing. In the moving processing, the first control unit 14 controls the movement restriction unit 52 to release the restriction of the rotation of the movement roller 50. Then, the first control unit 14 controls the movement driving unit 51 such that the contact part 22 moves at a predetermined speed in the movement direction. In this manner, the first control unit 14 can move the electromagnetic wave generation unit 11 at a predetermined speed in the movement direction. When step S10 is completed, the first control unit 14 advances the processing to step S11.

At step S11, the first control unit 14 executes movement amount detecting processing. In the movement amount detecting processing, the first control unit 14 detects the movement amount of the electromagnetic wave generation unit 11 based on a signal from the movement detection unit 53. When step S11 is completed, the first control unit 14 advances the processing to step S12.

At step S12, the first control unit 14 determines whether the electromagnetic wave generation unit 11 has moved by a predetermined movement amount based on the movement amount of the electromagnetic wave generation unit 11 detected at step S11. When determining that the electromagnetic wave generation unit 11 has not moved by the predetermined movement amount, the first control unit 14 advances the processing to step S10 again. When determining that the electromagnetic wave generation unit 11 has moved by the predetermined movement amount, the first control unit 14 advances the processing to step S13. In this manner, the first control unit 14 repeatedly executes steps S10 and S11 until it determines that the electromagnetic wave generation unit 11 has moved by the predetermined movement amount.

At step S13, the first control unit 14 executes stopping processing. In the stopping processing, the first control unit 14 controls the movement driving unit 51 to stop the contact part 22. The first control unit 14 controls the movement restriction unit 52 to restrict the rotation of the movement roller 50. The first control unit 14 initializes the movement amount detected by the movement detection unit 53. When step S13 is completed, the first control unit 14 advances the processing to step S13.

At step S14, the first control unit 14 determines whether a predetermined time has elapsed. When determining that the predetermined time has not elapsed, the first control unit 14 advances the processing to step S14 again. When determining that the predetermined time has elapsed, the first control unit 14 advances the processing to step S15.

At step S15, the first control unit 14 determines whether the movement of the electromagnetic wave generation unit 11 has been completed. In this processing, the first control unit 14 determines that the movement of the electromagnetic wave generation unit 11 has been completed when the electromagnetic wave generation unit 11 has moved up to the completion of the welding of the conveyance belt 97. When determining that the movement of the electromagnetic wave generation unit 11 has not been completed, the first control unit 14 advances the processing to step S10 again. When determining that the movement of the electromagnetic wave generation unit 11 has been completed, the first control unit 14 terminates the movement controlling processing. In this manner, the first control unit 14 repeatedly performs steps S10 to S14 until the movement of the electromagnetic wave generation unit 11 is completed.

In this manner, the first control unit 14 permits the contact part 22 to move each time a predetermined time elapses, and controls the contact part 22 to move by the predetermined movement amount. That is, the movement restriction unit 52 is configured to permit the contact part 22 to move each time a predetermined time elapses.

### Operations and Effects of Seventh Embodiment

Operations and effects of the seventh embodiment are described below.

(7-1) The electromagnetic wave generation unit 11 includes the movement restriction unit 52 that restricts the movement of the contact part 22. With this configuration, the movement of the contact part 22 can be restricted. In this manner, the welding of the conveyance belt 97 can be continued without moving the contact surface 23 with respect to the conveyance belt 97. Thus, the efficiency of the operation related to the welding of the conveyance belt 97 can be improved.

(7-2) The movement restriction unit 52 may permit the contact part 22 to move each time a predetermined time elapses. With this configuration, the movement of the contact part 22 is restricted until the predetermined time elapses, and thus the welding of the conveyance belt 97 can be continued without moving the contact surface 23 with respect to the conveyance belt 97. In addition, since the contact part 22 is permitted to move each time the predetermined time elapses, the welding can be performed in the next region of the conveyance belt 97 by moving the contact surface 23 with respect to the conveyance belt 97. Thus, the efficiency of the operation related to the welding of the conveyance belt 97 can be improved.

### Eighth Embodiment

Next, an eighth embodiment is described.

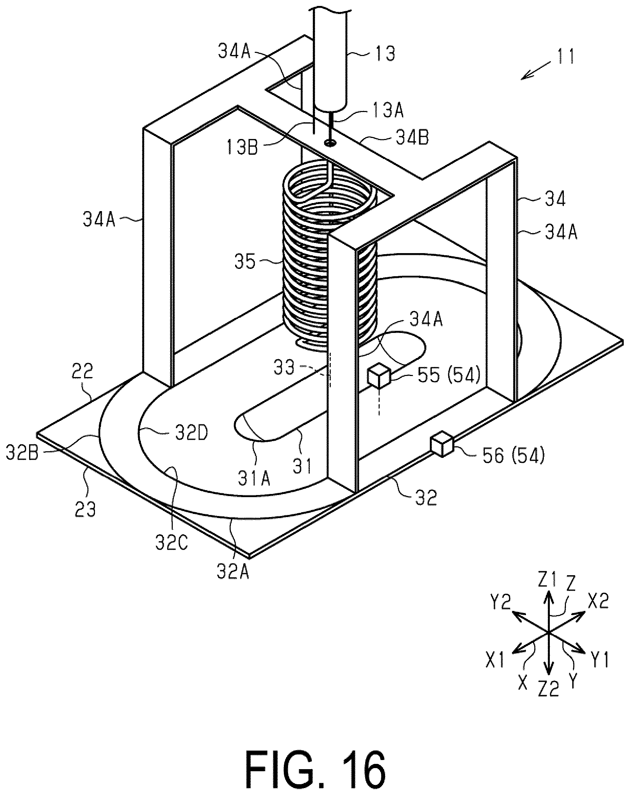

As illustrated in FIG. 16, in the eighth embodiment, the welding state of the conveyance belt 97 may be determined after the conveyance belt 97 is welded. The electromagnetic wave generation unit 11 may include a detection unit 54. That is, the conveyance belt welding apparatus 10 may include the detection unit 54. The detection unit 54 is configured to detect the welding state of the conveyance belt 97.

The detection unit 54 may include a first temperature detection unit 55. That is, the conveyance belt welding apparatus 10 may include the first temperature detection unit 55. The first temperature detection unit 55 detects the temperature of the contact position of the conveyance belt 97 in contact with the contact surface 23. The first temperature detection unit 55 may be a temperature sensor. The first temperature detection unit 55 may be a thermopile. The first temperature detection unit 55 may be provided inside the second conductor 34. The first temperature detection unit 55 outputs a signal indicating the detected temperature to the first control unit 14.

The detection unit 54 may include a second temperature detection unit 56. That is, the conveyance belt welding apparatus 10 may include the second temperature detection unit 56. The second temperature detection unit 56 detects the temperature of a predetermined position of the conveyance belt 97 not in contact with the contact surface 23. The second temperature detection unit 56 may be a temperature sensor. The second temperature detection unit 56 may be a thermistor.

The second temperature detection unit 56 may be provided outside the housing case 21, or outside the outer periphery 32B of the second electrode 32. The second temperature detection unit 56 may be provided at the contact part 22. The second temperature detection unit 56 may be provided on the other direction Y2 side in the second horizontal direction Y than the second electrode 32. The second temperature detection unit 56 may be provided on the one direction Y1 side in the second horizontal direction Y than the second electrode 32. The second temperature detection unit 56 may be provided on the one direction X1 side in the first horizontal direction X than the second electrode 32. The second temperature detection unit 56 may be provided on the other direction X2 side in the first horizontal direction X than the second electrode 32. The second temperature detection unit 56 outputs a signal indicating the detected temperature to the first control unit 14.

The first control unit 14 determines the welding state of the conveyance belt 97 based on the detection result of the first temperature detection unit 55 and the detection result the second temperature detection unit 56. The first control unit 14 determines the welding state of the conveyance belt 97 by using the electromagnetic wave generation unit 11 for the conveyance belt 97 that has dissipated heat after the welding.

Specifically, the electromagnetic wave generation unit 11 is disposed at the conveyance belt 97 such that the contact surface 23 comes into contact with the region where the conveyance belt 97 is welded. More specifically, the electromagnetic wave generation unit 11 may be disposed at the conveyance belt 97 such that the inner periphery 32D of the second electrode 32 is over the region where the conveyance belt 97 is welded in plan view. The electromagnetic wave generation unit 11 may be disposed at the conveyance belt 97 such that the region where the conveyance belt 97 is welded is surrounded by the inner periphery 32D of the second electrode 32 in plan view.

The first control unit 14 performs a control in a first welding state determination mode in response to the operation of the operation unit 15. The first welding state determination mode is a control mode for controlling the welding state of the conveyance belt 97. The first welding state determination mode is a control mode different from the welding mode of welding the conveyance belt 97.

In the first welding state determination mode, the first control unit 14 generates electromagnetic waves from the first electrode 31 and the second electrode 32 by applying a high-frequency voltage to the first electrode 31 and the second electrode 32 for a predetermined time, e.g., 5 seconds, for example. In this manner, the heat energy is transmitted to the conveyance belt 97. Thereafter, the first control unit 14 stops the generation of electromagnetic waves.

The first control unit 14 compares a first temperature detected by the first temperature detection unit 55 and a second temperature detected by the second temperature detection unit 56. The first control unit 14 refers to a temperature table stored in the memory.

The temperature table is a table showing a relationship of a temperature difference between the first temperature and the second temperature, and the welding state of the conveyance belt 97. Specifically, the temperature table is a table showing a relationship between the heat energy transmitted to the region where the conveyance belt 97 is welded and the welding state of the conveyance belt 97 based on the temperature difference between the first temperature and the second temperature. As a specific example, regarding the welding state of the conveyance belt 97, the heat energy transmitted to the conveyance belt 97 differs between a state where the welding of the conveyance belt 97 is sufficient and a state where the welding of the conveyance belt 97 is not sufficient, and as such the temperature difference between the first temperature and the second temperature differs.

The first control unit 14 acquires from the temperature table the welding state of the conveyance belt 97 corresponding to the temperature difference between the first temperature and the second temperature. Then, the first control unit 14 determines the acquired welding state of the conveyance belt 97, and displays the determination result on the display unit 16. As a specific example, the first control unit 14 may display on the display unit 16 at least one of the state where the welding of the conveyance belt 97 is sufficient and the state where the welding of the conveyance belt 97 is not sufficient as the determination result of the welding state of the conveyance belt 97.

In this manner, the first control unit 14 determines the welding state of the conveyance belt 97 based on the detection result of the first temperature detection unit 55 and the detection result the second temperature detection unit 56. Specifically, the first control unit 14 determines the welding state of the conveyance belt 97 based on the detection result of the detection unit 54.

### Operations and Effects of Eighth Embodiment

Operations and effects of the eighth embodiment are described below.

(8-1) In the related art, there is no apparatus for determining the welding state of the conveyance belt 97. Therefore, the welding state of the conveyance belt 97 has been determined by visually checking the external appearance of the conveyance belt 97 after the welding. In addition, in some cases the welding state of the conveyance belt 97 has been determined based on the past result of welding the conveyance belt 97. As such, the welding state of the conveyance belt 97 has been determined based on the empirical rule based on the type of the conveyance belt 97, the pressure exerted on the conveyance belt 97, and the heating temperature and heating time for heating the conveyance belt 97. In view of this, it is desired to improve the welding quality of the conveyance belt 97 by enhancing the determination of the welding state of the conveyance belt 97.

In this manner, the welding state of the conveyance belt 97 can be specified based on the detection result of the welding state of the conveyance belt 97 as a reference related to the welding of the conveyance belt 97. Thus, the welding quality of the conveyance belt 97 can be improved, and the efficiency of the operation related to the welding of the conveyance belt 97 can be improved.

(8-2) The welding state of the conveyance belt 97 is determined based on the detection result of the temperature at the contact position with the contact surface 23 and the detection result of the temperature at a predetermined position with no contact with the contact surface 23 as the temperature of the conveyance belt 97. With this configuration, the welding state of the conveyance belt 97 can be specified based on the temperature at the contact position with the contact surface 23 and the temperature at the predetermined position with no contact with the contact surface 23 as the temperature of the conveyance belt 97. Thus, the welding quality of the conveyance belt 97 can be improved, and the efficiency of the operation related to the welding of the conveyance belt 97 can be improved.

(8-3) The electromagnetic wave generation unit 11 can not only weld the conveyance belt 97 through generation of electromagnetic waves, but also determine the welding state of the conveyance belt 97. In this manner, the function of the electromagnetic wave generation unit 11 can be improved.

### Ninth Embodiment

Next, a ninth embodiment is described.

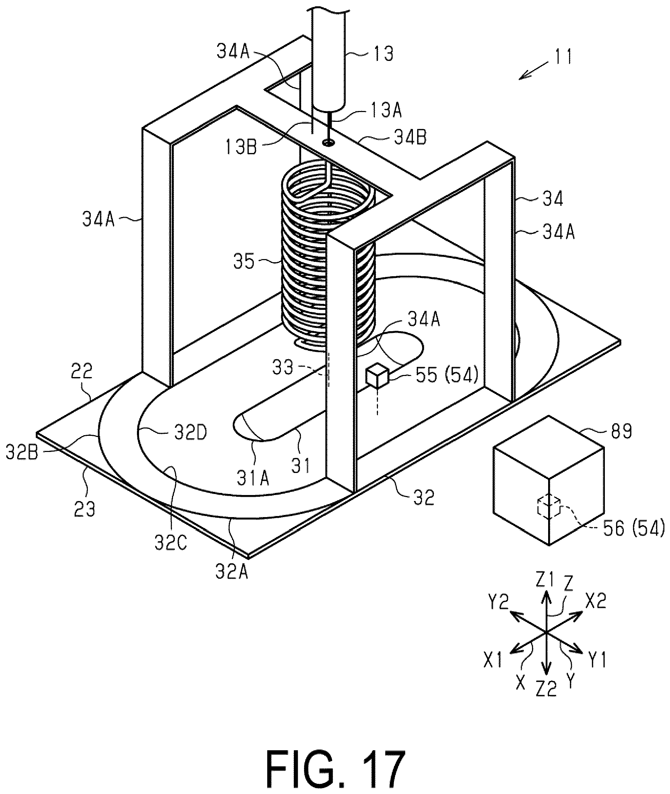

As illustrated in FIG. 17, in the ninth embodiment, the second temperature detection unit 56 may be provided in a pressing jig 89, instead of the electromagnetic wave generation unit 11. The second temperature detection unit 56 may be provided at the bottom surface of the pressing jig 89.

The pressing jig 89 is a jig for pressing from the upward direction Z1 side the region where the conveyance belt 97 is welded and cooling the region where the conveyance belt 97 is welded, after the welding of the conveyance belt 97. In this manner, the warp of the conveyance belt 97 after the welding can be further suppressed. The pressing jig 89 may or may not be included in the conveyance belt welding apparatus 10.

When the conveyance belt 97 is welded while moving the electromagnetic wave generation unit 11, the pressing jig 89 moves in the region of the conveyance belt 97 after the welding along with the movement of the electromagnetic wave generation unit 11. Specifically, the pressing jig 89 moves to follow the electromagnetic wave generation unit 11 in the region of the conveyance belt 97 after the welding. The pressing jig 89 may be made of metal.

The first control unit 14 performs a control in a second welding state determination mode in response to the operation of the operation unit 15. The second welding state determination mode is a control mode for determining the welding state of the conveyance belt 97 while performing the welding of the conveyance belt 97. The second welding state determination mode is a control mode that differs from the first welding state determination mode in the detection position based on the second temperature detection unit 56.

In the second welding state determination mode, the first control unit 14 can determine the welding state of the conveyance belt 97 continuously over a wider range while welding the conveyance belt 97 in comparison with when the second temperature detection unit 56 is provided in the electromagnetic wave generation unit 11.

### Operations and Effects of Ninth Embodiment

Operations and effects of the ninth embodiment are described below.

(9-1) The second temperature detection unit 56 may be provided in the pressing jig 89, which is a member separated from the electromagnetic wave generation unit 11. In this manner, the electromagnetic wave generation unit 11 can be downsized. In particular, the first control unit 14 can determine the welding state of the conveyance belt 97 when the welding of the conveyance belt 97 is performed. In this manner, when it is determined that the welding of the conveyance belt 97 is not sufficient, the welding of the conveyance belt 97 can be performed again.

### Tenth Embodiment

Next, a tenth embodiment is described.

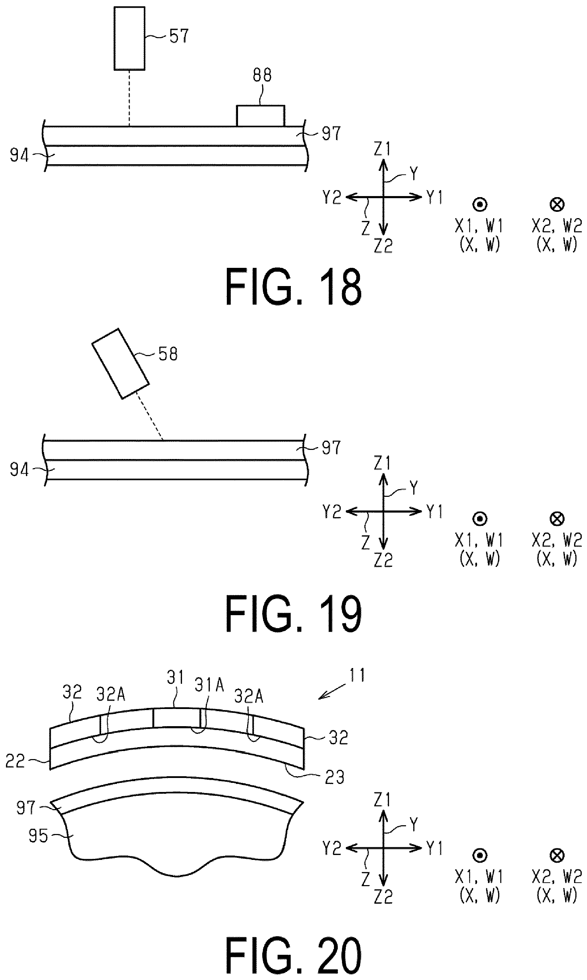

As illustrated in FIG. 18, in the tenth embodiment, the conveyance belt 97 may be physically vibrated, and the welding state of the conveyance belt 97 may be determined based on the detection result of the vibration of the conveyance belt 97.

The electromagnetic wave generation unit 11 may include a vibration detection unit 57. That is, the conveyance belt welding apparatus 10 may include the vibration detection unit 57. The vibration detection unit 57 is configured to detect the vibration of the conveyance belt 97. Specifically, the vibration detection unit 57 is configured to detect the vibration of the region where the conveyance belt 97 is welded. The vibration detection unit 57 may be a laser displacement device that emits laser light and receives reflected laser light. The vibration detection unit 57 may be a laser impactor or an ultrasound generator. The vibration detection unit 57 outputs a signal representing the vibration to the first control unit 14.

A vibration generation unit 88 is disposed at the conveyance belt 97. Specifically, the vibration generation unit 88 is disposed at the region where the conveyance belt 97 is welded. The vibration generation unit 88 is configured to generate vibration. The vibration generation unit 88 can generate vibration at the conveyance belt 97.

The electromagnetic wave generation unit 11 is moved in response to the operation of the operator in the state where the vibration from the vibration generation unit 88 is transmitted to the region where the conveyance belt 97 is welded. Specifically, the electromagnetic wave generation unit 11 is moved at a constant speed such that the vibration detection unit 57 is located along the region where the conveyance belt 97 is welded.

Then, the first control unit 14 determines that the conveyance belt 97 is not sufficiently welded regarding the welding state of the conveyance belt 97 when the variation related to the vibration of the conveyance belt 97 exceeds a threshold value based on the signal from the vibration detection unit 57. That is, the first control unit 14 determines the welding state of the conveyance belt 97 based on the detection result of the vibration detection unit 57.

As a specific example, when the electromagnetic wave generation unit 11 is moved at a constant speed in the case where the conveyance belt 97 is sufficiently welded, the variation related to the vibration of the conveyance belt 97 falls within an acceptable range along with the movement of the electromagnetic wave generation unit 11. The acceptable range is a range where the conveyance belt 97 is estimated to be sufficiently welded, and can specify the threshold value of the variation related to the vibration of the conveyance belt 97.

Thereafter, when the vibration detection unit 57 is disposed in the region where the conveyance belt 97 is not sufficiently welded, the variation related to the vibration of the conveyance belt 97 falls outside the acceptable range along with the movement of the electromagnetic wave generation unit 11. In this manner, the first control unit 14 determines whether the conveyance belt 97 is sufficiently welded regarding the welding state of the conveyance belt 97 by determining whether the variation related to the vibration of the conveyance belt 97 exceeds a threshold value.

### Eleventh Embodiment

Next, an eleventh embodiment is described.

As illustrated in FIG. 19, in the eleventh embodiment, laser light may be applied to the conveyance belt 97, and the welding state of the conveyance belt 97 may be determined based on the detection result of the reflected laser light.

The electromagnetic wave generation unit 11 may include a laser measurement unit 58. That is, the conveyance belt welding apparatus 10 may include the laser measurement unit 58. The laser measurement unit 58 is configured to emit laser light and receive reflected laser light. The laser measurement unit 58 is configured to emit laser light to the conveyance belt 97 and receive the laser light reflected at the conveyance belt 97. Specifically, the laser measurement unit 58 is configured to emit laser light to the region where the conveyance belt 97 is welded, and receive the laser light reflected at the region where the conveyance belt 97 is welded. The laser measurement unit 58 may be, but not limited to, a laser displacement device. The laser measurement unit 58 outputs a signal representing the received laser light to the first control unit 14.

The electromagnetic wave generation unit 11 moves such that laser light is emitted from the laser measurement unit 58 along the region where the conveyance belt 97 is welded. As a result of the laser light emitted from the laser measurement unit 58 to the region where the conveyance belt 97 is welded, the laser light reflected from the region other than the region where the conveyance belt 97 is welded is received depending on the welding state of the conveyance belt 97.

The first control unit 14 determines that the conveyance belt 97 is not sufficiently welded regarding the welding state of the conveyance belt 97 when the received laser light does not satisfy the acceptable condition based on the signal from the laser measurement unit 58. Specifically, the first control unit 14 determines the welding state of the conveyance belt 97 based on the detection result of the laser measurement unit 58.

### Twelfth Embodiment

Next, a twelfth embodiment is described.

As illustrated in FIG. 20, in the twelfth embodiment, the electromagnetic wave generation unit 11 that welds the conveyance belt 97 supported by a curved surface is used. The contact part 22 has a curved shape curved in the second horizontal direction Y. The contact surface 23 is a curved surface curved in the second horizontal direction Y. The first electrode surface 31A has a curved shape curved in the second horizontal direction Y. The second electrode surface 32A has a curved shape curved in the second horizontal direction Y. The second horizontal direction Y corresponds to an example of the second direction. The contact surface 23, the first electrode surface 31A and the second electrode surface 32A may have the same curvature as that of the outer periphery of the first roller 95 with the outer peripheral surface curved in the second horizontal direction Y.

In this manner, even when the welding of the conveyance belt 97 is performed in the region wound on the first roller 95, the contact surface 23 can be placed at the outer peripheral surface of the first roller 95. In this case, the welding of the conveyance belt 97 may be performed with a heat insulating sheet not illustrated in the drawing interposed between the first roller 95 and the conveyance belt 97. In this manner, the heat efficiency of the heat energy transmitted to the conveyance belt 97 can be improved. Thus, the efficiency of the operation related to the welding of the conveyance belt 97 can be improved.

### Operations and Effects of Twelfth Embodiment

Operations and effects of the twelfth embodiment are described below.

(12-1) In the related art, when welding the conveyance belt 97, it is necessary to place the conveyance belt 97 at a flat surface in consideration of the positional relationship between the conveyance belt 97 and conveyance belt welding apparatus, and it is desired to improve the efficiency of the operation.

In view of this, the contact surface 23 has a curved shape curved in the second horizontal direction Y. With this configuration, even when the conveyance belt 97 is supported by the first roller 95, the contact surface 23 can be disposed to follow the curvature of the first roller 95. In this manner, the uniformity of the distance between the contact surface 23 and the conveyance belt 97 can be increased. Thus, the welding quality of the conveyance belt 97 can be improved, and the efficiency of the operation related to the welding of the conveyance belt 97 can be improved.

(12-2) The first electrode surface 31A and the second electrode surface 32A have a curved shape curved in the second horizontal direction Y. With this configuration, even when the conveyance belt 97 is supported by the first roller 95, the first electrode surface 31A and the second electrode surface 32A can be disposed to follow the curvature of the first roller 95. In this manner, the uniformity of the distance between the first electrode surface 31A and the second electrode surface 32A, and the conveyance belt 97, and the uniformity of the distance between the first electrode surface 31A and the second electrode surface 32A, and the surface of the first roller 95 can be increased. Thus, the welding quality of the conveyance belt 97 can be improved, and the efficiency of the operation related to the welding of the conveyance belt 97 can be improved.

(12-3) The first roller 95 is provided outside the apparatus housing 92. In this manner, the welding of the conveyance belt 97 can be performed without disposing the electromagnetic wave generation unit 11 inside the apparatus housing 92. Thus, the welding quality of the conveyance belt 97 can be improved, and the efficiency of the operation related to the welding of the conveyance belt 97 can be improved.

### Modifications

The embodiments may be modified as follows for implementation. The embodiments and modifications described below may be combined for implementation insofar as they are not technically inconsistent.

In the second embodiment, the third conductor 42 may be movable in response to the operation of the operation unit 15 without using the power of the driving unit 43. In this case, the conveyance belt welding apparatus 10 may not include the driving unit 43.

In the seventh embodiment, the first control unit 14 may display the movement speed of the contact part 22 on the display unit 16 based on the detection result of the movement detection unit 53. In this manner, the actual movement speed of the contact part 22 can be specified. The first control unit 14 may display a result of comparison of the movement speed of the contact part 22 and a predetermined speed on the display unit 16 based on the detection result of the movement detection unit 53. As a specific example, the first control unit 14 may display a fact that the movement speed of the contact part 22 is higher than a predetermined speed on the display unit 16. The first control unit 14 may display at least one of a fact that the movement speed of the contact part 22 is higher than the predetermined speed and a fact that it is lower than the predetermined speed on the display unit 16. The first control unit 14 may adjust the rotation load of the movement roller such that the movement speed of the contact part 22 is at the predetermined speed. In this case, the electromagnetic wave generation unit 11 may include a rotation load adjusting unit that adjusts the rotation load of the movement roller.

In the seventh embodiment, the first control unit 14 may display information or a sound indicating that a predetermined time has elapsed on the display unit 16 when the predetermined time has elapsed.

In the seventh embodiment, the electromagnetic wave generation unit 11 may not include the movement driving unit 51, and the contact part 22 may be manually moved by the operator. The electromagnetic wave generation unit 11 may not include the movement restriction unit 52, and the contact part 22 may be manually stopped by the operator.

In the tenth embodiment, the electromagnetic wave generation unit 11 may not include the vibration detection unit 57. The vibration detection unit 57 may be provided as a member separated from the electromagnetic wave generation unit 11. The vibration detection unit 57 may be included in the conveyance belt welding apparatus 10. The vibration generation unit 88 may be included in the conveyance belt welding apparatus 10.

In the eleventh embodiment, the electromagnetic wave generation unit 11 may not include the laser measurement unit 58. The laser measurement unit 58 may be provided as a member separated from the electromagnetic wave generation unit 11. The laser measurement unit 58 may be included in the conveyance belt welding apparatus 10.

In the twelfth embodiment, the contact surface 23 may be a curved surface curved in the first horizontal direction X. At least one of the contact part 22, the first electrode surface 31A and the second electrode surface 32A may have a curved shape curved in the first horizontal direction X. That is, the first horizontal direction X may correspond to an example of the second direction.

In the twelfth embodiment, the conveyance belt welding apparatus 10 may perform the welding of the conveyance belt 97 in the region wound on the second roller 96. The conveyance belt welding apparatus 10 may perform the welding of the conveyance belt 97 when the support surface is curved, which is not limited to the first roller 95 and the second roller 96.

In plan view, the housing case 21 may be located inside the outer periphery 32B of the second electrode 32 as long as it is located outside the inner periphery 32D of the second electrode 32. In plan view, the shield part 36 is located inside the housing case 21, but it may be located inside the outer periphery 32B of the second electrode 32 as long as it is located outside the inner periphery 32D of the second electrode 32. The shield part 36 may have a plate shape instead of the net shape.

The contact part 22 may not come into surface contact with the conveyance belt 97 but may come into point contact with the conveyance belt 97 as long as the distance between the first electrode 31 and the second electrode 32, and the conveyance belt 97 is within a predetermined range.

The contact part 22 may not come into surface contact with the first electrode 31 and the second electrode 32, but may come into point contact with the first electrode 31 and the second electrode 32 as long as the distance between the first electrode 31 and the second electrode 32, and the conveyance belt 97 is within a predetermined range. In addition, the contact part 22 may not come into contact with the first electrode 31 and the second electrode 32.

At least one of the first electrode 31 and the second electrode 32 is not limited to the flat plate shape, and may have a substantially flat plate shape, for example. The substantially flat plate shape may include a shape curved in the thickness direction as the direction along the vertical direction Z, and a linear shape as a rectangular shape with very large aspect ratio, for example.

The recording apparatus 90 may be a laser printer that records images by attaching toner by using laser light. Specifically, the recording system of the recording apparatus 90 is not limited, and may be an ink-jet system or a laser system.

The expression "at least one of" used in the specification means one or more of desired options. As an example, when the number of options is two, the expression "at least one of" used in the specification means only one option or both of the two options. As another example, when the number of options is three or more, the expression "at least one of" used in the specification means only one option or any combination of two or more options.

### Supplementary Notes

The following is a description of the technical ideas and their effects that can be grasped from the above-described embodiments and modifications. This technical concept and its effects can be combined with each other to the extent that they are not technically inconsistent.
(A) A conveyance belt welding apparatus configured to weld a conveyance belt configured to convey a medium, the conveyance belt welding apparatus including a contact part including a contact surface configured to come into contact with the conveyance belt, a first electrode, a second electrode disposed surrounding the first electrode in plan view from a first direction toward the conveyance belt, a first conductor including a coil and configured to electrically couple a transmission line configured to transmit a high-frequency voltage and the first electrode, and a second conductor configured to electrically couple the transmission line and the second electrode. The first electrode and the second electrode weld the conveyance belt by generating electromagnetic waves in response to application of a high-frequency voltage.

With this configuration, a high heat energy can be transmitted to the conveyance belt by generating electromagnetic waves in response to the application of the high-frequency voltage. Thus, the efficiency of the operation related to the welding of the conveyance belt can be improved while ensuring the welding quality of the conveyance belt.

(B) The above-described conveyance belt welding apparatus may further include a housing, the housing may cover at least a part of the first electrode and the second electrode and at least a part of the first conductor and the second conductor, the housing may include the contact part, and a housing case constituting an inner space together with the contact part, the inner space being configured to house the first electrode and the second electrode, at least a part of the contact part may have transmissivity, and at least a part of the housing case may have transmissivity.

With this configuration, the visibility of the conveyance belt in contact with the contact surface can be improved through the contact part that can come into contact with the conveyance belt and the housing case that constitutes the inner space together with the contact part. In this manner, the welding state of the conveyance belt in contact with the contact surface can be easily visually recognized. Thus, the efficiency of the operation related to the welding of the conveyance belt can be improved.

(C) In the above-described conveyance belt welding apparatus, the housing case may be configured to house the second conductor, and the second conductor may have a net shape in whole or in part.

With this configuration, the visibility of the conveyance belt in contact with the contact surface can be improved through the second conductor housed in the housing case. In this manner, the welding state of the conveyance belt in contact with the contact surface can be easily visually recognized. Thus, the efficiency of the operation related to the welding of the conveyance belt can be improved.

(D) The above-described conveyance belt welding apparatus may further include an irradiation unit configured to irradiate the conveyance belt in contact with the contact part.

With this configuration, the visibility of the conveyance belt in contact with the contact surface can be improved through the irradiation of the conveyance belt. In this manner, the welding state of the conveyance belt in contact with the contact surface can be easily visually recognized. Thus, the efficiency of the operation related to the welding of the conveyance belt can be improved.

(E) In the above-described conveyance belt welding apparatus, the second electrode may include a second electrode surface facing the conveyance belt, and the second electrode surface may have a curved shape curved in a second direction intersecting the first direction.

With this configuration, even when the support surface supporting the conveyance belt is curved, the second electrode surface can be disposed to follow the curvature of the support surface. In this manner, the uniformity of the distance between the second electrode surface and the conveyance belt, and the uniformity of the distance between the second electrode surface and the support surface can be increased. Thus, the welding quality of the conveyance belt can be improved, and the efficiency of the operation related to the welding of the conveyance belt can be improved.

(F) In the above-described conveyance belt welding apparatus, the first electrode may include a first electrode surface facing the conveyance belt, and the first electrode surface may have a curved shape curved in the second direction.

With this configuration, even when the support surface supporting the conveyance belt is curved, the first electrode surface can be disposed to follow the curvature of the support surface. In this manner, the uniformity of the distance between the first electrode surface and the conveyance belt, and the uniformity of the distance between the first electrode surface and the support surface can be increased. Thus, the welding quality of the conveyance belt can be improved, and the efficiency of the operation related to the welding of the conveyance belt can be improved.

(G) In the above-described conveyance belt welding apparatus, the contact surface may have a curved shape curved in the second direction.

With this configuration, even when the support surface supporting the conveyance belt is curved, the contact surface can be disposed to follow the curvature of the support surface. In this manner, the uniformity of the distance between the contact surface and the conveyance belt can be increased. Thus, the welding quality of the conveyance belt can be improved, and the efficiency of the operation related to the welding of the conveyance belt can be improved.

(H) The above-described conveyance belt welding apparatus may further include a frequency adjusting unit configured to adjust a resonance frequency of the electromagnetic waves generated from the first electrode and the second electrode.

With this configuration, the resonance frequency of the electromagnetic waves can be adjusted in accordance with the welding condition of the conveyance belt. Thus, the welding quality of the conveyance belt can be improved, and the efficiency of the operation related to the welding of the conveyance belt can be improved.

(I) The above-described conveyance belt welding apparatus may further include a third conductor supported by the second conductor. The frequency adjusting unit may adjust the resonance frequency of the electromagnetic waves generated from the first electrode and the second electrode by adjusting a distance between the first electrode and the third conductor.

With this configuration, with a simple configuration of adjusting the distance between the first electrode and the third conductor, the resonance frequency of the electromagnetic waves can be adjusted. Thus, the welding quality of the conveyance belt can be improved, and the efficiency of the operation related to the welding of the conveyance belt can be improved.

(J) In the above-described conveyance belt welding apparatus, the frequency adjusting unit may include a driving unit configured to move the third conductor.

With this configuration, the distance between the first electrode and the third conductor can be adjusted by driving unit, and the resonance frequency of the electromagnetic waves can be adjusted. Thus, the welding quality of the conveyance belt can be improved, and the efficiency of the operation related to the welding of the conveyance belt can be improved.

(K) In the above-described conveyance belt welding apparatus, the frequency adjusting unit may include a coupling position switching unit configured to switch a coupling position for coupling the transmission line among a plurality of coupling positions along an extending direction of the coil, and the frequency adjusting unit may adjust the resonance frequency of the electromagnetic waves generated from the first electrode and the second electrode by switching the coupling position for coupling the transmission line.

With this configuration, the resonance frequency of the electromagnetic waves can be adjusted with the simple configuration of switching the coupling position of the coil and the transmission line. Thus, the welding quality of the conveyance belt can be improved, and the efficiency of the operation related to the welding of the conveyance belt can be improved.

(L) In the above-described conveyance belt welding apparatus, the contact surface may include a first contact surface and a second contact surface, and the first contact surface may generate electromagnetic waves stronger than electromagnetic waves of the second contact surface.

With this configuration, the heat energy to be transmitted to the conveyance belt can be adjusted in accordance with whether the first contact surface or the second contact surface is brought into contact with the conveyance belt. Thus, the welding quality of the conveyance belt can be improved, and the efficiency of the operation related to the welding of the conveyance belt can be improved.

(M) In the above-described conveyance belt welding apparatus, the first electrode may be provided eccentrically from a center of a region surrounded by an inner periphery of the second electrode in plan view from the first direction, and the first contact surface may be located on an eccentric direction side of the first electrode.

With this configuration, the distance between the first electrode and the second electrode can be adjusted with the simple configuration in which the first electrode is eccentric from the center of the region surrounded by the inner periphery of the second electrode. In this manner, the intensity of the electromagnetic waves generated from the first electrode and the second electrode can be adjusted. In this manner, the first contact surface and the second contact surface can be made to function by adjusting the heat energy to be transmitted to the conveyance belt 97. Thus, the welding quality of the conveyance belt can be improved, and the efficiency of the operation related to the welding of the conveyance belt can be improved.

(N) In the above-described conveyance belt welding apparatus, the first electrode may include a first electrode surface facing the conveyance belt, the second electrode may include a second electrode surface facing the conveyance belt, the first electrode surface and the second electrode surface may be provided tilted with respect to the contact surface, and the first contact surface may be located on a side of the contact surface in which the distance to the first electrode surface and the second electrode surface is closer.

With this configuration, the distance between the first electrode surface and the second electrode surface, and the conveyance belt can be adjusted with the simple configuration in which the first electrode surface and the second electrode surface are tilted with respect to the contact surface. In this manner, the first contact surface and the second contact surface can be made to function by adjusting the heat energy to be transmitted to the conveyance belt 97. Thus, the welding quality of the conveyance belt can be improved, and the efficiency of the operation related to the welding of the conveyance belt can be improved.

(O) The above-described conveyance belt welding apparatus may further include an electromagnet configured to generate a magnetic force. The contact surface may be configured to come into contact with the conveyance belt with the conveyance belt sandwiched between the contact surface and a support stand made of metal, and the electromagnet may be configured to generate the magnetic force in the first direction.

With this configuration, the conveyance belt in contact with the contact surface can be pressed by generating a magnetic force between it and the metal support stand. In this manner, the adhesion between the contact surface and the conveyance belt can be improved. Thus, the welding quality of the conveyance belt can be improved, and the efficiency of the operation related to the welding of the conveyance belt can be improved.

(P) In the above-described conveyance belt welding apparatus, the electromagnet may be provided outside an inner periphery of the second electrode in plan view from the first direction.

With this configuration, with the electromagnet second provided outside the inner periphery of the electrode, it is possible to reduce the influence on the electromagnetic waves generated from the first electrode and the second electrode along with the generation of the magnetic force from the electromagnet. Thus, the welding quality of the conveyance belt can be improved, and the efficiency of the operation related to the welding of the conveyance belt can be improved.

(Q) In the above-described conveyance belt welding apparatus, in plan view from the first direction, the electromagnet may be provided at a corner portion that is outside an outer periphery of the second electrode and that constitutes an outer edge of the contact part.

With this configuration, with the electromagnet provided outside the outer periphery of the second electrode, the influence on the electromagnetic waves generated from the first electrode and the second electrode can be reduced. In addition, with the electromagnet provided at the corner portion, the contact surface can equally make intimate contact with the conveyance belt. Thus, the welding quality of the conveyance belt can be improved, and the efficiency of the operation related to the welding of the conveyance belt can be improved.

(R) The above-described conveyance belt welding apparatus may further include a magnetic force switching unit configured to switch whether to generate the magnetic force from the electromagnet.

With this configuration, whether to generate the magnetic force from the electromagnet can be switched. Thus, the welding quality of the conveyance belt can be improved, and the efficiency of the operation related to the welding of the conveyance belt can be improved.

(S) The above-described conveyance belt welding apparatus may further include a magnetic force adjusting unit configured to adjust an intensity of the magnetic force generated from the electromagnet.

With this configuration, the intensity of the magnetic force generated from the electromagnet can be adjusted. Thus, the welding quality of the conveyance belt can be improved, and the efficiency of the operation related to the welding of the conveyance belt can be improved.

(T) The above-described conveyance belt welding apparatus may further include a movement indication part configured to indicate a movement amount of the contact part with respect to the conveyance belt.

With this configuration, the contact part can be moved with reference to the movement amount of the displayed contact part. Thus, the efficiency of the operation related to the welding of the conveyance belt can be improved.

(U) The above-described conveyance belt welding apparatus may further include a movement restriction unit configured to restrict a movement of the contact part.

With this configuration, the movement of the contact part can be restricted. In this manner, the welding of the conveyance belt can be continued without moving the contact surface with respect to the conveyance belt. Thus, the efficiency of the operation related to the welding of the conveyance belt can be improved.

(V) In the above-described conveyance belt welding apparatus, the movement restriction unit may permit the contact part to move each time a predetermined time elapses.

With this configuration, the movement of the contact part is restricted until the predetermined time elapses, and thus the welding of the conveyance belt can be continued without moving the contact surface with respect to the conveyance belt. In addition, the contact part is permitted to move each time a predetermined time elapses, and thus welding can be performed in the next region of the conveyance belt by moving the contact surface with respect to the conveyance belt. Thus, the efficiency of the operation related to the welding of the conveyance belt can be improved.

(W) The above-described conveyance belt welding apparatus may further include a control unit, and a detection unit configured to detect a welding state of the conveyance belt. The control unit may determine the welding state of the conveyance belt based on a detection result of the detection unit.

With this configuration, the welding state of the conveyance belt can be specified based on the detection result of the welding state of the conveyance belt as the reference related to the welding of the conveyance belt. Thus, the welding quality of the conveyance belt can be improved, and the efficiency of the operation related to the welding of the conveyance belt can be improved.

(X) The above-described conveyance belt welding apparatus may further include a control unit, a first temperature detection unit configured to detect a temperature of a contact position of the conveyance belt in contact with the contact surface, and a second temperature detection unit configured to detect a temperature of a predetermined position not in contact with the contact surface. The control unit may determine a welding state of the conveyance belt based on a detection result of the first temperature detection unit and a detection result of the second temperature detection unit.

With this configuration, the welding state of the conveyance belt can be specified based on the temperature of the contact position in contact with the contact surface and the temperature of the predetermined position with no contact with the contact surface as the temperature of the conveyance belt. Thus, the welding quality of the conveyance belt can be improved, and the efficiency of the operation related to the welding of the conveyance belt can be improved.

(Y) A conveyance belt welding method using a conveyance belt welding apparatus configured to weld a conveyance belt configured to convey a medium, the conveyance belt welding apparatus including a contact part including a contact surface configured to come into contact with the conveyance belt, a first electrode, a second electrode disposed surrounding the first electrode in plan view from a first direction toward the conveyance belt, a first conductor including a coil and configured to electrically couple a transmission line configured to transmit a high-frequency voltage and the first electrode, and a second conductor configured to electrically couple the transmission line and the second electrode, the conveyance belt welding method including welding the conveyance belt by the first electrode and the second electrode by generating electromagnetic waves in response to application of a high-frequency voltage. With this configuration, the same effect as that of (A) can be achieved.

## Claims

1. A conveyance belt welding apparatus configured to weld a conveyance belt configured to convey a medium, the conveyance belt welding apparatus comprising:
a contact part (22) including a contact surface (23) configured to come into contact with the conveyance belt (97);
a first electrode (31);
a second electrode (32);
a first conductor (33) including a coil (35) and configured to electrically couple a transmission line (13) configured to transmit a high-frequency voltage and the first electrode; and
a second conductor (34) configured to electrically couple the transmission line and the second electrode, wherein
the first electrode and the second electrode weld the conveyance belt by generating electromagnetic waves in response to application of a high-frequency voltage, **characterized in that** the second electrode (32) is disposed surrounding the first electrode in plan view from a first direction toward the conveyance belt.

2. The conveyance belt welding apparatus according to claim 1, further comprising
a housing (20), wherein
the housing covers at least a part of the first electrode and the second electrode and at least a part of the first conductor and the second conductor,
the housing includes the contact part (22), and a housing case (21) constituting an inner space together with the contact part, the inner space being configured to house the first electrode and the second electrode,
at least a part of the contact part has transmissivity, and
at least a part of the housing case has transmissivity.

3. The conveyance belt welding apparatus according to claim 2, wherein
the housing case (21) is configured to house the second conductor (34) and
the second conductor has a net shape in whole or in part.

4. The conveyance belt welding apparatus according to claim 3, further comprising an irradiation unit (40) configured to irradiate the conveyance belt in contact with the contact part.

5. The conveyance belt welding apparatus according to claim 1, wherein
the second electrode includes a second electrode surface (32A) facing the conveyance belt and
the second electrode surface has a curved shape curved in a second direction intersecting the first direction.

6. The conveyance belt welding apparatus according to claim 5, wherein
the first electrode includes a first electrode surface (31A) facing the conveyance belt and
the first electrode surface has a curved shape curved in the second direction.

7. The conveyance belt welding apparatus according to claim 5, wherein
the contact surface (23) has a curved shape curved in the second direction.

8. The conveyance belt welding apparatus according to claim 1, further comprising
a frequency adjusting unit (41) configured to adjust a resonance frequency of the electromagnetic waves generated from the first electrode and the second electrode.

9. The conveyance belt welding apparatus according to claim 8, further comprising
a third conductor (42) supported by the second conductor, wherein
the frequency adjusting unit (41) adjusts the resonance frequency of the electromagnetic waves generated from the first electrode and the second electrode by adjusting a distance between the first electrode and the third conductor.

10. The conveyance belt welding apparatus according to claim 9, wherein
the frequency adjusting unit includes a driving unit (43) configured to move the third conductor (42).

11. The conveyance belt welding apparatus according to claim 8, wherein
the frequency adjusting unit includes a coupling position switching unit (44) configured to switch a coupling position for coupling the transmission line (13) among a plurality of coupling positions along an extending direction of the coil (35) and
the frequency adjusting unit adjusts the resonance frequency of the electromagnetic waves generated from the first electrode and the second electrode by switching the coupling position for coupling the transmission line.

12. The conveyance belt welding apparatus according to claim 1, wherein
the contact surface includes a first contact surface (23A) and a second contact surface (23B) and
the first contact surface generates electromagnetic waves stronger than electromagnetic waves of the second contact surface.

13. The conveyance belt welding apparatus according to claim 12, wherein
the first electrode (31) is provided eccentrically from a center of a region surrounded by an inner periphery (32D) of the second electrode in plan view from the first direction and
the first contact surface (23A) is located on an eccentric direction side of the first electrode.

14. The conveyance belt welding apparatus according to claim 12, wherein
the first electrode includes a first electrode surface (31A) facing the conveyance belt,
the second electrode includes a second electrode surface (32A) facing the conveyance belt,
the first electrode surface and the second electrode surface are provided tilted with respect to the contact surface (23), and
the first contact surface is located on a side of the contact surface in which a distance to the first electrode surface and the second electrode surface is closer.

15. The conveyance belt welding apparatus according to claim 1, further comprising
an electromagnet (45) configured to generate a magnetic force, wherein
the contact surface (23) is configured to come into contact with the conveyance belt (97) with the conveyance belt sandwiched between the contact surface and a support stand (94) made of metal and
the electromagnet is configured to generate the magnetic force in the first direction.

16. The conveyance belt welding apparatus according to claim 15, wherein
the electromagnet (45) is provided outside an inner periphery (32D) of the second electrode in plan view from the first direction.

17. The conveyance belt welding apparatus according to claim 16, wherein
in plan view from the first direction, the electromagnet (45) is provided at a corner portion (22A) that is outside an outer periphery (32B) of the second electrode and that constitutes an outer edge of the contact part (22).

18. The conveyance belt welding apparatus according to claim 15, further comprising
a magnetic force switching unit (47) configured to switch whether to generate the magnetic force from the electromagnet.

19. The conveyance belt welding apparatus according to claim 15, further comprising
a magnetic force adjusting unit (48) configured to adjust an intensity of the magnetic force generated from the electromagnet.

20. The conveyance belt welding apparatus according to claim 1, further comprising
a movement indication part (49) configured to indicate a movement amount of the contact part with respect to the conveyance belt.

21. The conveyance belt welding apparatus according to claim 20, further comprising
a movement restriction unit (52) configured to restrict a movement of the contact part.

22. The conveyance belt welding apparatus according to claim 21, wherein
the movement restriction unit (52) permits the contact part to move each time a predetermined time elapses.

23. The conveyance belt welding apparatus according to claim 1, further comprising:
a control unit (14); and
a detection unit (54) configured to detect a welding state of the conveyance belt, wherein
the control unit determines the welding state of the conveyance belt based on a detection result of the detection unit.

24. The conveyance belt welding apparatus according to claim 1, further comprising:
a control unit (14);
a first temperature detection unit (55) configured to detect a temperature of a contact position of the conveyance belt in contact with the contact surface; and
a second temperature detection unit (56) configured to detect a temperature of a predetermined position not in contact with the contact surface, wherein
the control unit determines a welding state of the conveyance belt based on a detection result of the first temperature detection unit and a detection result of the second temperature detection unit.

25. A conveyance belt welding method using a conveyance belt welding apparatus configured to weld a conveyance belt configured to convey a medium, the conveyance belt welding apparatus including
a contact part (22) including a contact surface (23) configured to come into contact with the conveyance belt (97),
a first electrode (31),
a second electrode (32) disposed surrounding the first electrode in plan view from a first direction toward the conveyance belt,
a first conductor (33) including a coil (35) and configured to electrically couple a transmission line (13) configured to transmit a high-frequency voltage and the first electrode, and
a second conductor (34) configured to electrically couple the transmission line and the second electrode, the conveyance belt welding method comprising
welding the conveyance belt by the first electrode and the second electrode by generating electromagnetic waves in response to application of a high-frequency voltage.

## Patentansprüche

1. Förderbandschweißvorrichtung, die eingerichtet ist, ein Förderband zu schweißen, das eingerichtet ist, ein Medium zu befördern, wobei die Förderbandschweißvorrichtung umfasst:
ein Kontaktteil (22), das eine Kontaktfläche (23) beinhaltet, die eingerichtet ist, mit dem Förderband (97) in Kontakt zu gelangen;
eine erste Elektrode (31);
eine zweite Elektrode (32);
einen ersten Leiter (33), der eine Spule (35) beinhaltet und eingerichtet ist, eine Übertragungsleitung (13), die eingerichtet ist, eine Hochfrequenzspannung zu übertragen, und die erste Elektrode elektrisch zu koppeln; und
einen zweiten Leiter (34), der eingerichtet ist, die Übertragungsleitung und die zweite Elektrode elektrisch zu koppeln, wobei
die erste Elektrode und die zweite Elektrode das Förderband durch Erzeugen von elektromagnetischen Wellen als Reaktion auf Anlegen einer Hochfrequenzspannung schweißen, **dadurch gekennzeichnet, dass** die zweite Elektrode (32) so angeordnet ist, dass sie die erste Elektrode in Draufsicht aus einer ersten Richtung zu dem Förderband umgibt.

2. Förderbandschweißvorrichtung nach Anspruch 1, ferner umfassend
ein Gehäuse (20), wobei
das Gehäuse mindestens einen Teil der ersten Elektrode und der zweiten Elektrode und mindestens einen Teil des ersten Leiters und des zweiten Leiters bedeckt,
das Gehäuse das Kontaktteil (22) und eine Gehäuseschale (21), die gemeinsam mit dem Kontaktteil einen Innenraum bildet, beinhaltet, wobei der Innenraum eingerichtet ist, die erste Elektrode und die zweite Elektrode aufzunehmen,
mindestens ein Teil des Kontaktteils optische Durchlässigkeit aufweist, und
mindestens ein Teil der Gehäuseschale optische Durchlässigkeit aufweist.

3. Förderbandschweißvorrichtung nach Anspruch 2, wobei
die Gehäuseschale (21) eingerichtet ist, den zweiten Leiter (34) aufzunehmen, und
der zweite Leiter zur Gänze oder teilweise eine Netzform aufweist.

4. Förderbandschweißvorrichtung nach Anspruch 3, ferner umfassend
eine Bestrahlungseinheit (40), die eingerichtet ist, das Förderband in Kontakt mit dem Kontaktteil zu bestrahlen.

5. Förderbandschweißvorrichtung nach Anspruch 1, wobei
die zweite Elektrode eine zweite Elektrodenfläche (32A) beinhaltet, die dem Förderband zugewandt ist, und
die zweite Elektrodenfläche eine gekrümmte Form aufweist, die in einer zweiten Richtung gekrümmt ist, die die erste Richtung schneidet.

6. Förderbandschweißvorrichtung nach Anspruch 5, wobei
die erste Elektrode eine erste Elektrodenfläche (31A) beinhaltet, die dem Förderband zugewandt ist, und
die erste Elektrodenfläche eine gekrümmte Form aufweist, die in der zweiten Richtung gekrümmt ist.

7. Förderbandschweißvorrichtung nach Anspruch 5, wobei
die Kontaktfläche (23) eine gekrümmte Form aufweist, die in der zweiten Richtung gekrümmt ist.

8. Förderbandschweißvorrichtung nach Anspruch 1, ferner umfassend
eine Frequenzanpassungseinheit (41), die eingerichtet ist, eine Resonanzfrequenz der elektromagnetischen Wellen anzupassen, die von der ersten Elektrode und der zweiten Elektrode erzeugt werden.

9. Förderbandschweißvorrichtung nach Anspruch 8, ferner umfassend
einen dritten Leiter (42), der von dem zweiten Leiter gestützt wird, wobei
die Frequenzanpassungseinheit (41), die Resonanzfrequenz der elektromagnetischen Wellen, die von der ersten Elektrode und der zweiten Elektrode erzeugt werden, durch Anpassen einer Distanz zwischen der ersten Elektrode und dem dritten Leiter anpasst.

10. Förderbandschweißvorrichtung nach Anspruch 9, wobei
die Frequenzanpassungseinheit eine Antriebseinheit (43) beinhaltet, die eingerichtet ist, den dritten Leiter (42) zu bewegen.

11. Förderbandschweißvorrichtung nach Anspruch 8, wobei
die Frequenzanpassungseinheit eine Kopplungspositionsschalteinheit (44) beinhaltet, die eingerichtet ist, eine Kopplungsposition zum Koppeln der Übertragungsleitung (13) aus einer Vielzahl von Kopplungspositionen entlang einer Erstreckungsrichtung der Spule (35) umzuschalten, und
die Frequenzanpassungseinheit die Resonanzfrequenz der elektromagnetischen Wellen, die von der ersten Elektrode und der zweiten Elektrode erzeugt werden, durch Umschalten der Kopplungsposition zum Koppeln der Übertragungsleitung anpasst.

12. Förderbandschweißvorrichtung nach Anspruch 1, wobei
die Kontaktfläche eine erste Kontaktfläche (23A) und eine zweite Kontaktfläche (23B) beinhaltet und
die erste Kontaktfläche elektromagnetische Wellen erzeugt, die stärker sind als elektromagnetische Wellen der zweiten Kontaktfläche.

13. Förderbandschweißvorrichtung nach Anspruch 12, wobei
die erste Elektrode (31) exzentrisch von einem Mittelpunkt eines Bereichs bereitgestellt wird, der von einem Innenumfang (32D) der zweiten Elektrode in Draufsicht aus der ersten Richtung umgeben ist, und
die erste Kontaktfläche (23A) sich an einer exzentrischen Richtungsseite der ersten Elektrode befindet.

14. Förderbandschweißvorrichtung nach Anspruch 12, wobei
die erste Elektrode eine erste Elektrodenfläche (31A) beinhaltet, die dem Förderband zugewandt ist,
die zweite Elektrode eine zweite Elektrodenfläche (32A) beinhaltet, die dem Förderband zugewandt ist,
die erste Elektrodenfläche und die zweite Elektrodenfläche in Bezug auf die Kontaktfläche (23) geneigt bereitgestellt sind, und
die erste Kontaktfläche sich an einer Seite der Kontaktfläche befindet, in der ein Abstand zu der ersten Elektrodenfläche und der zweiten Elektrodenfläche enger ist.

15. Förderbandschweißvorrichtung nach Anspruch 1, ferner umfassend
einen Elektromagnet (45), der eingerichtet ist, eine Magnetkraft zu erzeugen; wobei
die Kontaktfläche (23) eingerichtet ist, mit dem Förderband (97) in Kontakt zu gelangen, wobei das Förderband zwischen der Kontaktfläche und einem Trägerständer (94) aus Metall liegt, und
der Elektromagnet eingerichtet ist, die Magnetkraft in der ersten Richtung zu erzeugen.

16. Förderbandschweißvorrichtung nach Anspruch 15, wobei
der Elektromagnet (45) außerhalb eines Innenumfangs (32D) der zweiten Elektrode in Draufsicht aus der ersten Richtung bereitgestellt ist.

17. Förderbandschweißvorrichtung nach Anspruch 16, wobei
in Draufsicht aus der ersten Richtung, der Elektromagnet (45) an einem Eckabschnitt (22A) bereitgestellt ist, der sich außerhalb eines Außenumfangs (32B) der zweiten Elektrode befindet und der einen Außenrand des Kontaktteils (22) bildet.

18. Förderbandschweißvorrichtung nach Anspruch 15, ferner umfassend
eine Magnetkraftschalteinheit (47), die eingerichtet ist, umzuschalten, um die Magnetkraft von dem Elektromagnet zu erzeugen.

19. Förderbandschweißvorrichtung nach Anspruch 15, ferner umfassend
eine Magnetkraftanpassungseinheit (48), die eingerichtet ist, eine Stärke der von dem Elektromagnet erzeugten Magnetkraft anzupassen.

20. Förderbandschweißvorrichtung nach Anspruch 1, ferner umfassend
ein Bewegungsanzeigeteil (49), das eingerichtet ist, ein Bewegungsausmaß des Kontaktteils in Bezug auf das Förderband anzuzeigen.

21. Förderbandschweißvorrichtung nach Anspruch 20, ferner umfassend
eine Bewegungsbegrenzungseinheit (52), die eingerichtet ist, eine Bewegung des Kontaktteils zu begrenzen.

22. Förderbandschweißvorrichtung nach Anspruch 21, wobei
die Bewegungsbegrenzungseinheit (52) dem Kontaktteil ermöglicht, sich immer nach Verstreichen einer vorbestimmten Zeit zu bewegen.

23. Förderbandschweißvorrichtung nach Anspruch 1, ferner umfassend:
eine Steuereinheit (14); und
eine Detektionseinheit (54), die eingerichtet ist, einen Schweißzustand des Förderbands zu detektieren, wobei
die Steuereinheit den Schweißzustand des Förderbands basierend auf einem Detektionsergebnis der Detektionseinheit bestimmt.

24. Förderbandschweißvorrichtung nach Anspruch 1, ferner umfassend:
eine Steuereinheit (14);
eine erste Temperaturdetektionseinheit (55), die eingerichtet ist, eine Temperatur einer Kontaktposition des Förderbands in Kontakt mit der Kontaktfläche zu detektieren; und
eine zweite Temperaturdetektionseinheit (56), die eingerichtet ist, eine Temperatur einer vorbestimmten Position, die nicht mit der Kontaktfläche in Kontakt ist, zu detektieren, wobei
die Steuereinheit einen Schweißzustand des Förderbands basierend auf einem Detektionsergebnis der ersten Temperaturdetektionseinheit und einem Detektionsergebnis der zweiten Temperaturdetektionseinheit bestimmt.

25. Förderbandschweißverfahren, das eine Förderbandschweißvorrichtung verwendet, die eingerichtet ist, ein Förderband zu schweißen, das eingerichtet ist, ein Medium zu befördern, wobei die Förderbandschweißvorrichtung beinhaltet
ein Kontaktteil (22), das eine Kontaktfläche (23) beinhaltet, die eingerichtet ist, mit dem Förderband (97) in Kontakt zu gelangen,
eine erste Elektrode (31),
eine zweite Elektrode (32), die so angeordnet ist, dass sie die erste Elektrode in Draufsicht aus einer ersten Richtung zu dem Förderband umgibt,
einen ersten Leiter (33), der eine Spule (35) beinhaltet und eingerichtet ist, eine Übertragungsleitung (13), die eingerichtet ist, eine Hochfrequenzspannung zu übertragen, und die erste Elektrode elektrisch zu koppeln, und
einen zweiten Leiter (34); der eingerichtet ist, die Übertragungsleitung und die zweite Elektrode elektrisch zu koppeln, wobei das Förderbandschweißverfahren umfasst
Schweißen des Förderbands durch die erste Elektrode und die zweite Elektrode durch Erzeugen von elektromagnetischen Wellen in Reaktion auf Anlegen einer Hochfrequenzspannung.

## Revendications

1. Appareil de soudage de courroie de transport, configuré pour souder une courroie de transport configurée pour transporter un support, l'appareil de soudage de courroie de transport comprenant :
une partie de contact (22) incluant une surface de contact (23) configurée pour venir en contact avec la courroie de transport (97) ;
une première électrode (31) ;
une deuxième électrode (32) ;
un premier conducteur (33) incluant une bobine (35) et configuré pour coupler électriquement une ligne de transmission (13) configurée pour transmettre une tension haute fréquence et la première électrode ; et
un deuxième conducteur (34) configuré pour coupler électriquement la ligne de transmission et la deuxième électrode, dans lequel
la première électrode et la deuxième électrode soudent la courroie de transport en générant des ondes électromagnétiques en réponse à l'application d'une tension haute fréquence, **caractérisé en ce que** la deuxième électrode (32) est disposée de manière à entourer la première électrode dans une vue en plan depuis une première direction vers la courroie de transport.

2. Appareil de soudage de courroie de transport selon la revendication 1, comprenant en outre
un boîtier (20), dans lequel
le boîtier recouvre au moins une partie de la première électrode et de la deuxième électrode et au moins une partie du premier conducteur et du deuxième conducteur,
le boîtier inclut la partie de contact (22) et une enveloppe de boîtier (21) constituant un espace intérieur conjointement avec la partie de contact, l'espace intérieur étant configuré pour accueillir la première électrode et la deuxième électrode,
au moins une partie de la partie de contact possède une transmissivité, et
au moins une partie de l'enveloppe de boîtier possède une transmissivité.

3. Appareil de soudage de courroie de transport selon la revendication 2, dans lequel
l'enveloppe de boîtier (21) est configurée pour accueillir le deuxième conducteur (34) et
le deuxième conducteur présente entièrement ou partiellement une forme de filet.

4. Appareil de soudage de courroie de transport selon la revendication 3, comprenant en outre une unité d'irradiation (40) configurée pour irradier la courroie de transport en contact avec la partie de contact.

5. Appareil de soudage de courroie de transport selon la revendication 1, dans lequel
la deuxième électrode inclut une surface de deuxième électrode (32A) tournée vers la courroie de transport et
la surface de deuxième électrode présente une forme incurvée dans une deuxième direction coupant la première direction.

6. Appareil de soudage de courroie de transport selon la revendication 5, dans lequel
la première électrode inclut une surface de première électrode (31A) tournée vers la courroie de transport et
la surface de première électrode présente une forme incurvée dans la deuxième direction.

7. Appareil de soudage de courroie de transport selon la revendication 5, dans lequel
la surface de contact (23) présente une forme incurvée dans la deuxième direction.

8. Appareil de soudage de courroie de transport selon la revendication 1, comprenant en outre
une unité de réglage de fréquence (41) configurée pour régler une fréquence de résonnance des ondes électromagnétiques générées à partir de la première électrode et de la deuxième électrode.

9. Appareil de soudage de courroie de transport selon la revendication 8, comprenant en outre
un troisième conducteur (42) supporté par le deuxième conducteur, dans lequel
l'unité de réglage de fréquence (41) règle la fréquence de résonnance des ondes électromagnétiques générées à partir de la première électrode et de la deuxième électrode en réglant une distance entre la première électrode et le troisième conducteur.

10. Appareil de soudage de courroie de transport selon la revendication 9, dans lequel
l'unité de réglage de fréquence inclut une unité d'entraînement (43) configurée pour déplacer le troisième conducteur (42).

11. Appareil de soudage de courroie de transport selon la revendication 8, dans lequel
l'unité de réglage de fréquence inclut une unité de commutation de position de couplage (44) configurée pour commuter une position de couplage afin de coupler la ligne de transmission (13) parmi une pluralité de positions de couplage le long d'une direction d'extension de la bobine (35) et
l'unité de réglage de fréquence règle la fréquence de résonnance des ondes électromagnétiques générées à partir de la première électrode et de la deuxième électrode en commutant la position de couplage afin de coupler la ligne de transmission.

12. Appareil de soudage de courroie de transport selon la revendication 1, dans lequel
la surface de contact inclut une première surface de contact (23A) et une deuxième surface de contact (23B) et
la première surface de contact génère des ondes électromagnétiques plus intenses que les ondes électromagnétiques de la deuxième surface de contact.

13. Appareil de soudage de courroie de transport selon la revendication 12, dans lequel
la première électrode (31) est disposée de façon excentrée par rapport à un centre d'une région entourée par une périphérie intérieure (32D) de la deuxième électrode dans une vue en plan depuis la première direction et
la première surface de contact (23A) se situe sur un côté de direction excentrée de la première électrode.

14. Appareil de soudage de courroie de transport selon la revendication 12, dans lequel
la première électrode inclut une surface de première électrode (31A) tournée vers la courroie de transport,
la deuxième électrode inclut une surface de deuxième électrode (32A) tournée vers la courroie de transport,
la surface de première électrode et la surface de deuxième électrode sont disposées de façon inclinée par rapport à la surface de contact (23), et
la surface de première électrode se situe sur un côté de la surface de contact sur lequel une distance jusqu'à la surface de première électrode et la surface de deuxième électrode est plus proche.

15. Appareil de soudage de courroie de transport selon la revendication 1, comprenant en outre
un électroaimant (45) configuré pour générer une force magnétique, dans lequel
la surface de contact (23) est configurée pour venir en contact avec la courroie de transport (97) avec la courroie de transport prise en sandwich entre la surface de contact et un montant de support (94) constitué de métal et
l'électroaimant est configuré pour générer la force magnétique dans la première direction.

16. Appareil de soudage de courroie de transport selon la revendication 15, dans lequel
l'électroaimant (45) est disposé à l'extérieur d'une périphérie intérieure (32D) de la deuxième électrode dans une vue en plan depuis la première direction.

17. Appareil de soudage de courroie de transport selon la revendication 16, dans lequel
dans une vue en plan depuis la première direction, l'électroaimant (45) est disposé au niveau d'une partie de coin (22A) extérieure à une périphérie extérieure (32B) de la deuxième électrode et constituant un bord extérieur de la partie de contact (22).

18. Appareil de soudage de courroie de transport selon la revendication 15, comprenant en outre
une unité de commutation de force magnétique (47) configurée pour commuter selon s'il faut générer la force magnétique à partir de l'électroaimant.

19. Appareil de soudage de courroie de transport selon la revendication 15, comprenant en outre
une unité de réglage de force magnétique (48) configurée pour régler une intensité de la force magnétique générée à partir de l'électroaimant.

20. Appareil de soudage de courroie de transport selon la revendication 1, comprenant en outre
une partie d'indication de déplacement (49) configurée pour indiquer une quantité de déplacement de la partie de contact par rapport à la courroie de transport.

21. Appareil de soudage de courroie de transport selon la revendication 20, comprenant en outre
une unité de limitation de déplacement (52) configurée pour limiter un déplacement de la partie de contact.

22. Appareil de soudage de courroie de transport selon la revendication 21, dans lequel
l'unité de limitation de déplacement (52) permet à la partie de contact de se déplacer à chaque fois qu'un temps prédéterminé s'est écoulé.

23. Appareil de soudage de courroie de transport selon la revendication 1, comprenant en outre :
une unité de contrôle (14) ; et
une unité de détection (54) configurée pour détecter un état de soudure de la courroie de transport, dans lequel
l'unité de contrôle détermine l'état de soudure de la courroie de transport sur la base d'un résultat de détection de l'unité de détection.

24. Appareil de soudage de courroie de transport selon la revendication 1, comprenant en outre :
une unité de contrôle (14) ;
une première unité de détection de température (55) configurée pour détecter une température d'une position de contact de la courroie de transport en contact avec la surface de contact ; et
une deuxième unité de détection de température (56) configurée pour détecter une température d'une position prédéterminée sans contact avec la surface de contact, dans lequel
l'unité de contrôle détermine un état de soudure de la courroie de transport sur la base d'un résultat de détection de la première unité de détection de température et d'un résultat de détection de la deuxième unité de détection de température.

25. Procédé de soudage de courroie de transport au moyen d'un appareil de soudage de courroie de transport configuré pour souder une courroie de transport configurée pour transporter un support, l'appareil de soudage de courroie de transport incluant
une partie de contact (22) incluant une surface de contact (23) configurée pour venir en contact avec la courroie de transport (97),
une première électrode (31),
une deuxième électrode (32) disposée de manière à entourer la première électrode dans une vue en plan depuis une première direction vers la courroie de transport,
un premier conducteur (33) incluant une bobine (35) et configuré pour coupler électriquement une ligne de transmission (13) configurée pour transmettre une tension haute fréquence et la première électrode, et
un deuxième conducteur (34) configuré pour coupler électriquement la ligne de transmission et la deuxième électrode, le procédé de soudage de courroie de transport comprenant
le soudage de la courroie de transport par la première électrode et la deuxième électrode, par génération d'ondes électromagnétiques en réponse à l'application d'une tension haute fréquence.
